# EUROPEAN PATENT APPLICATION

(11) **EP 4 586 444 A1**
(43) Date of publication of application: **16.07.2025**
(21) Application number: 22958129.3
(22) Date of filing: 08.09.2022
(51) Int. Cl.: H02J 7/00

(54) **COVER MEMBER**

(71) Applicant: Japan Tobacco Inc., Tokyo 105-6927 (JP)
(72) Inventor: FUJIKI, Takashi, Tokyo 130-8603 (JP); YOSHIDA, Ryo, Tokyo 130-8603 (JP)
(74) Representative: Hoffmann Eitle
(86) International application number: PCT/JP2022/033719
(87) International publication number: WO 2024/053050

(57) **Abstract**

In the present invention, a cover member attachable to and detachable from an electronic device that operates using a built-in first battery is provided with: a second battery; a power supply circuit that supplies power from the second battery to the electronic device; and a notification unit that gives notification of the total value of the remaining charge of the first battery and the remaining charge of the second battery.

## Description

### Technical Field

The present disclosure relates to a cover member.

### Background Art

Most of portable electronic devices operate on built-in batteries in main bodies. Batteries used can be primary batteries or can be secondary batteries. Lids or other cover members that can be attached or detached by users are attached to electronic devices that operate on primary batteries. Electronic devices that operate on secondary batteries include USB terminals or other feeder terminals for externally charging the secondary batteries. In recent years, there are electronic devices capable of wirelessly charging secondary batteries without feeder terminals.

### Citation List

### Patent Literature

PTL 1: Japanese Unexamined Patent Application Publication (Translation of PCT Application) No. 2019-512245

### Summary of Invention

### Technical Problem

Recent portable electronic devices consume large amounts of electric power and are also desired to be used for long periods of time. As measures for these conflicting requests, portable batteries (hereinafter, referred to as "mobile batteries") that supply electric power to electronic devices are prepared. However, according to current specifications, the levels of the built-in batteries in the electronic devices and the levels of the mobile batteries are separately displayed.

The present disclosure provides a technology for a user to easily grasp the amount of electric power usable in the whole of an electronic device to which a cover member is attached in view of the above problem.

### Solution to Problem

An aspect of the present disclosure provides a cover member that is attachable to and detachable from an electronic device that operates on a built-in first battery. The cover member includes a second battery, a feeder circuit that supplies electric power from the second battery to the electronic device, and a notifier that notifies a total value of a level of the first battery and a level of the second battery.

The notifier may notify the total value calculated by using the level of the second battery, corrected according to a supply efficiency of electric power from the second battery to the electronic device.

The cover member may further include a charging circuit that charges the second battery upon receiving electric power supplied from the electronic device.

The notifier may individually notify the level of the first battery and the level of the second battery in response to operation of a user.

The cover member may further include a controller that calculates the total value and causes the notifier to display the total value.

The notifier may display the total value acquired through communication with the electronic device.

A main body attached to the electronic device may cover part of a surface of the electronic device.

A main body may be allowed to operate a switch on the electronic device by a user pushing the main body in a state attached to the electronic device, the switch being provided at a position facing the main body.

The cover member may further include an operating portion that notifies the electronic device upon receiving operation of a user.

A main body attached to the electronic device may form a unified appearance with a part not covered with the main body in the electronic device.

The electronic device may be an aerosol generating device including a heater that heats an aerosol source, and attachment of the main body to the aerosol generating device may be one of conditions on which the aerosol source is allowed to be heated by the heater.

When the level of the first battery is lower than a capacity needed to use up an unused aerosol source but the total value of the level of the first battery and the level of the second battery is higher than the capacity needed to use up an unused aerosol source, the notifier may notify that an unused aerosol source can be used up by using the level of the second battery.

When the level of the first battery is lower than a capacity needed to use up an unused aerosol source but the level of the second battery is higher than the capacity needed to use up an unused aerosol source, the notifier may notify that an unused aerosol source can be used up by using the level of the second battery.

### Advantageous Effects of Invention

According to the aspect of the present disclosure, it is possible for a user to easily grasp the amount of electric power usable in the whole of an electronic device to which a cover member is attached.

### Brief Description of Drawings

[Fig. 1] Fig. 1 is a front-side view of an aerosol generating device from diagonally above.
[Fig. 2] Fig. 2 is a front-side view of the aerosol generating device from diagonally below.
[Fig. 3] Fig. 3 is a diagram that illustrates a configuration example of a notifier provided in a front panel.
[Fig. 4] Fig. 4 is a view of the aerosol generating device from above with a shutter removed.
[Fig. 5] Fig. 5 is a front view of a main device in a state where the front panel is removed.
[Fig. 6] Fig. 6 is a back view of the front panel removed from the main device.
[Fig. 7] Fig. 7 is a diagram that schematically illustrates the internal configuration of the aerosol generating device.
[Fig. 8] Fig. 8 is a diagram that schematically illustrates a connection relation between the front panel and a power supply system circuit in the main device.
[Fig. 9] Fig. 9 is a flowchart that illustrates an example of a front panel attachment detection operation that is executed by a controller.
[Fig. 10] Fig. 10 is a flowchart that illustrates an example of a processing operation related to a function of displaying a total value of the level of a primary battery of the front panel and the level of a secondary battery of the main device.
[Fig. 11] Fig. 11 is a diagram that illustrates a display example of the level of the batteries, usable in the whole of the aerosol generating device.
[Fig. 12] Fig. 12 is a flowchart that illustrates an operation in which the secondary battery of the main device is charged by the primary battery of the front panel.
[Fig. 13] Fig. 13 is a timing chart that illustrates auxiliary charging that uses the primary battery of the front panel as an external power supply.
[Fig. 14] Fig. 14 is a flowchart that illustrates an example of a USB charging operation that is executed by the controller.
[Fig. 15] Fig. 15 is a timing chart that illustrates a USB charging operation.
[Fig. 16] Fig. 16 is a graph that illustrates the amount of electric power usable in the whole of the aerosol generating device 1.
[Fig. **17]** Fig. 17 is a table that illustrates a relationship between the level of the primary battery of the front panel used as an auxiliary power supply and a level usable in the main device.
[Fig. 18] Fig. 18 is a flowchart that illustrates another example of a processing operation related to a function of displaying a total value of the level of the primary battery of the front panel and the level of the secondary battery of the main device.
[Fig. 19] Fig. 19 is a diagram that illustrates a display example of the level of the batteries, usable in the whole of the aerosol generating device.
[Fig. 20] Fig. 20 is a timing chart that illustrates auxiliary charging that uses the primary battery of the front panel as an external power supply.
[Fig. 21] Fig. 21 is a diagram that illustrates another configuration example of the notifier provided in the front panel.
[Fig. 22] Fig. 22 is a diagram that illustrates another configuration example of the notifier provided in the front panel.
[Fig. 23] Fig. 23 is a diagram that illustrates a display example in a case where the whole of the notifier is made up of a liquid crystal display or the like.
[Fig. 24] Fig. 24 is a diagram that schematically illustrates the internal configuration of the aerosol generating device.
[Fig. 25] Fig. 25 is a diagram that schematically illustrates a connection relation between the front panel and a power supply system circuit in the main device.
[Fig. 26] Fig. 26 is a flowchart that illustrates an example of USB charging operation that is executed by a controller.
[Fig. 27] Fig. 27 is a timing chart that illustrates a USB charging operation.
[Fig. 28] Fig. 28 is a diagram that schematically illustrates the internal configuration of an aerosol generating device used in a fifth embodiment.
[Fig. 29] Fig. 29 is a diagram that schematically illustrates a connection relation between the front panel and a power supply system circuit in the main device, used in the fifth embodiment.
[Fig. 30] Fig. 30 is a flowchart that illustrates an example of a processing operation example in a sixth embodiment.
[Fig. 31] Fig. 31 is a diagram that illustrates a display example of information, made by the notifier.
[Fig. 32] Fig. 32 is a timing chart that illustrates auxiliary charging that uses a battery of the front panel as an external power supply.
[Fig. 33] Fig. 33 is a flowchart that illustrates an example of a processing operation example in a seventh embodiment.
[Fig. 34] Fig. 34 is a flowchart that illustrates an example of a processing operation example in an eighth embodiment.
[Fig. 35] Fig. 35 is a flowchart that illustrates an example of a processing operation example in a ninth embodiment. Description of Embodiments

Hereinafter, embodiments related to the present disclosure will be described with reference to the drawings. Like reference signs are assigned to the same portions in the drawings.

### <Terms>

Aerosol generating devices according to embodiments each are one mode of an electronic cigarette.

In the following description, a material that is generated by the aerosol generating devices is referred to as aerosol. An aerosol means a mixed element of minute liquid or solid particles suspended in gas with air or other gas.

In each of the embodiments, the aerosol generating device that generates an aerosol without combustion will be described.

In the following description, an action that a user inhales an aerosol generated by the aerosol generating device is referred to as "inhalation" or "puff".

In each of the embodiments, the aerosol generating device to which a solid aerosol source can be attached will be described. A casing that houses a solid aerosol source is also referred to as "capsule" or "stick substrate" according to a product form. Capsules and stick substrates are consumables. Therefore, a guide for replacement is set for capsules and stick substrates.

### <First Embodiment>

### <Appearance Example>

Initially, an appearance example of the aerosol generating device that is used in a first embodiment will be described.

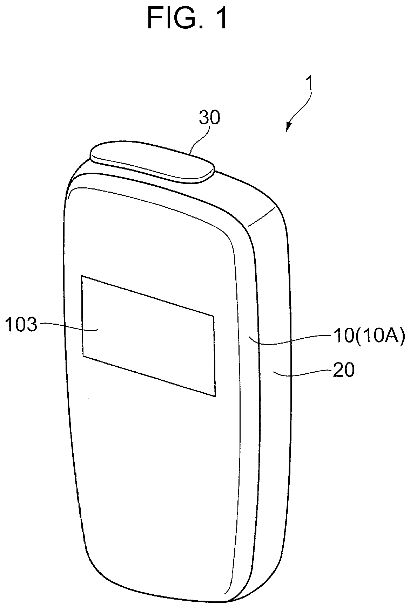

Fig. 1 is a front-side view of the aerosol generating device 1 from diagonally above.

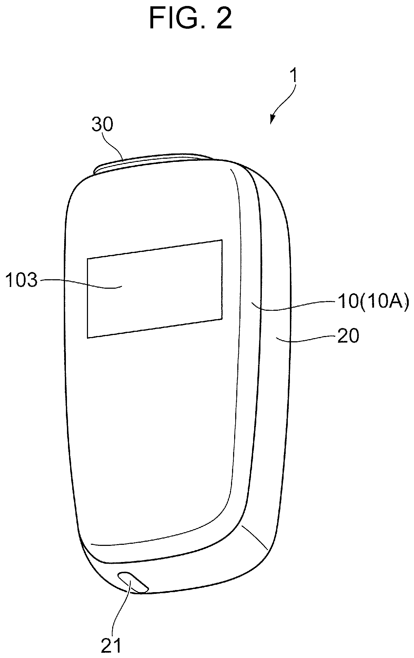

Fig. 2 is a front-side view of the aerosol generating device 1 from diagonally below.

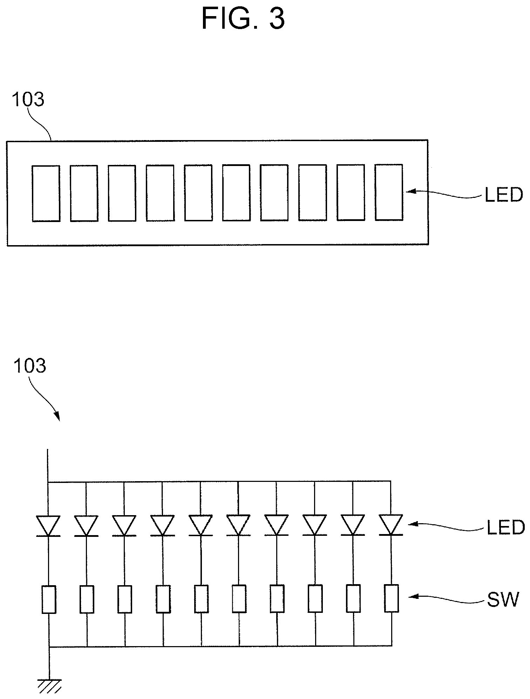

Fig. 3 is a diagram that illustrates a configuration example of a notifier 103 provided in a front panel 10.

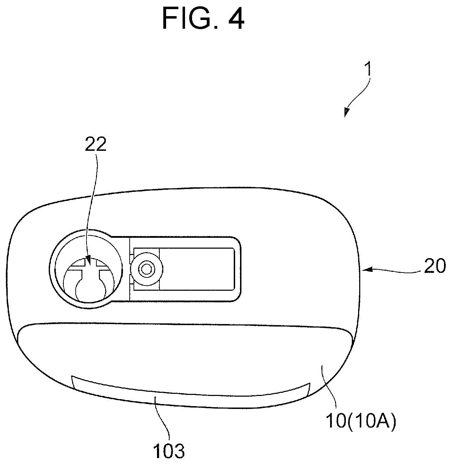

Fig. 4 is a view of the aerosol generating device 1 from above with a shutter 30 removed.

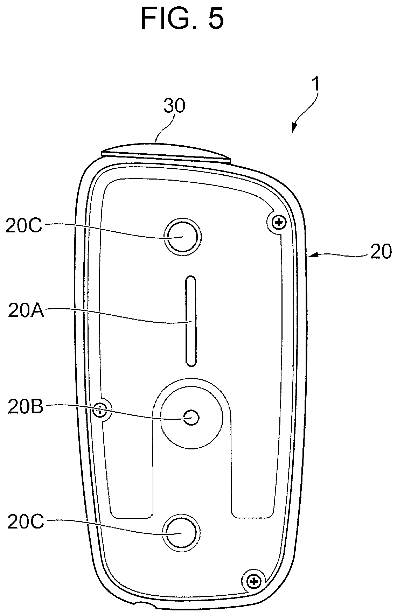

Fig. 5 is a front view of a main device 20 in a state where the front panel 10 is removed.

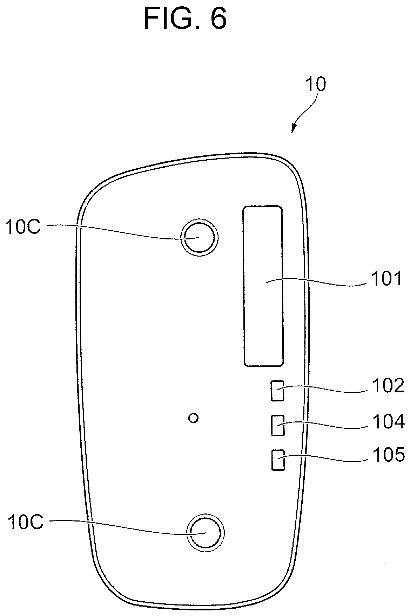

Fig. 6 is a back view of the front panel 10 removed from the main device 20.

The aerosol generating device 1 that is used in the present embodiment has such a size that a user is able to hold the aerosol generating device 1 with one hand.

The aerosol generating device 1 includes the main device 20, the front panel 10 attached to the front of the main device 20, and the shutter 30 disposed at the top surface of the main device 20 and operable so as to slide along the top surface.

The front panel 10 is a member that is attachable to and detachable from the main device 20. Attachment and detachment of the front panel 10 are performed by a user.

The front panel 10 attached to the main device 20 covers a front part of the main device 20 as illustrated in Figs. 1 and 2. In other words, after the front panel 10 is attached as well, a part other than the front part of the main device 20 can be viewed from an outside. For example, the side surface, back surface, top surface, and bottom surface of the main device 20 can be viewed from an outside after the front panel 10 is attached as well.

As illustrated in Figs. 1 and 2, the front panel 10 attached to the main device 20 is continuously flush with the side surface, top surface, and bottom surface of the main device 20 without any step and provides a unified appearance.

In this way, one of the roles of the front panel 10 is decoration. The side surface, top surface, and bottom surface of the main device 20 are examples of the part not covered with the front panel 10.

The notifier 103 is provided in the front panel 10. The notifier 103 in the present embodiment is a segment-type display that indicates the levels of built-in batteries in the front panel 10 and the main device 20. In the case of the present embodiment, the notifier 103 is made up of 10 segments. Each segment is made up of a light emitting diode (LED), and turning-on and turning-off of each LED are controlled by a switch SW connected in series with the LED. For example, a transistor is used as the switch SW.

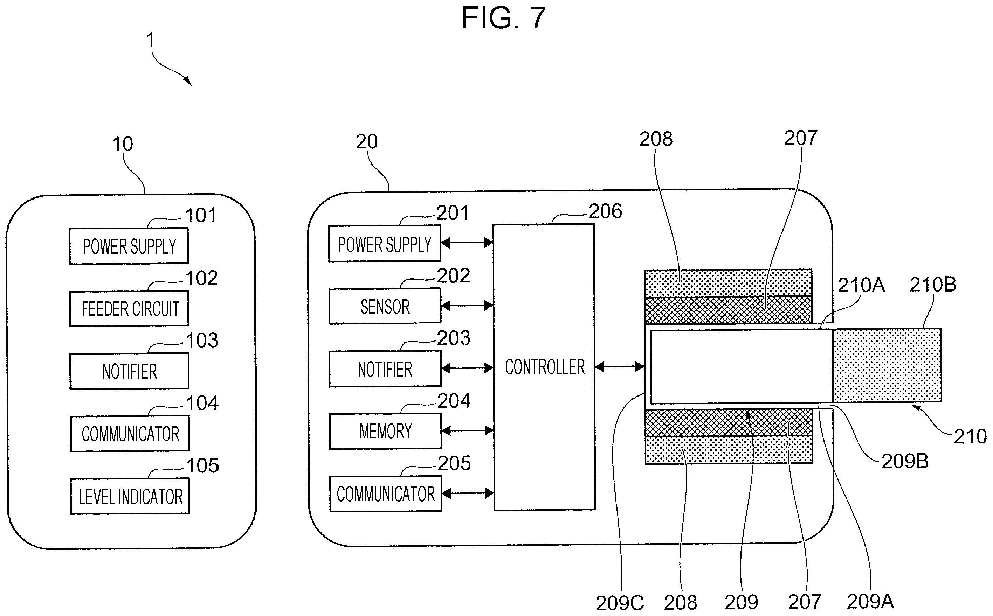

Turning-on and blinking of each LED indicate the status or the like of the operation of the main device 20. The status of the operation also includes an error. Turning-on and blinking of each LED are controlled by a controller 206 (see Fig. 7) (described later).

The front panel 10 plays not only a role as decoration but also a role of buffering propagation of heat released from the main device 20 or the like. Therefore, in the case of the present embodiment, generation of an aerosol is permitted only when the front panel 10 is attached to the main device 20. In other words, the front panel 10 attached to the main device 20 provides a unified appearance with the main device 20 in a state where generation of an aerosol is possible.

Furthermore, the front panel 10 plays a role in protecting the main device 20 from dirt, flaw, or the like. The battery-mounted front panel 10 plays a role in increasing the amount of electric power usable in the whole of the aerosol generating device 1.

The front panel 10 used in the present embodiment deforms when a user pushes a position below the notifier 103 with a finger tip and returns to an original form when the user stops pushing.

A power supply 101 capable of discharging electricity, a feeder circuit 102 that supplies the main device 20 with electric power stored in the power supply 101, a communicator 104 capable of at least communicating with the main device 20, and a level indicator 105 that measures the level of electric power stored in the power supply 101 are installed on the inner side of the front panel 10 that is used in the present embodiment.

In the case of the present embodiment, for example, a film-type primary battery, a coil-type primary battery, or a chip-type primary battery is assumed as the power supply 101. These batteries are attachable to and detachable from the front panel 10.

Arrangement of the power supply 101, the feeder circuit 102, the communicator 104, and the level indicator 105 in Fig. 6 is an example. A plurality of the power supplies 101 may be installed in the front panel 10.

The front panel 10 in the present embodiment is an example of the cover member. A main body panel 10A that provides the appearance of the front panel 10 illustrated in Figs. 1 and 2 is an example of the main body.

A type C universal serial bus (USB) connector 21 is provided at the bottom surface side of the main device 20. The shape or type of the USB connector 21 is an example. In other words, the USB connector 21 may be a USB other than type C. In the case of the first embodiment, the USB connector 21 is, for example, used to charge a power supply 201 (see Fig. 7) built in the main device 20.

A hole 22 for inserting a stick substrate 210 (see Fig. 7) that houses an aerosol source is provided at a top surface part of the main device 20. In the stick substrate 210 used in the present embodiment, a solid aerosol source is housed in a paper cylinder molded in a substantially cylindrical shape. The hole 22 is exposed when the shutter 30 is caused to slide to an open position and is hidden when the shutter 30 is caused to slide to a closed position.

In the case of the first embodiment, the hole 22 has a cylindrical shape substantially the same type as the stick substrate 210. The diameter of an opening part of the hole 22 is such a dimension that the stick substrate 210 can be inserted. In other words, the diameter of the stick substrate 210 is such a dimension that the stick substrate 210 can be inserted into the hole 22.

For example a magnet is attached to the back surface of the shutter 30. On the other hand, a Hall IC is attached to the main device 20 in a movable range of the shutter 30.

A Hall IC is a magnetic sensor made up of a Hall element, an operational amplifier, and the like, and outputs a voltage according to the strength of a magnetic field that crosses the Hall element.

In the present embodiment, the open or closed state of the shutter 30 is detected from a change in voltage output from the Hall IC as a result of a slide of the shutter 30. In other words, whether the shutter 30 is at the open position or the closed position is detected.

A button 20B is disposed at substantially the center of the front surface of the main device 20. As described above, the button 20B is allowed to be operated in a state where the front panel 10 remains attached.

The button 20B is, for example, used to turn on or off the power of the main device, turn on or off the supply of electric power to a heater 207 (see Fig. 7) that heats an aerosol source, provide pairing instructions for Bluetooth (registered trademark), and the like.

When the button 20B is pressed and held (for example, pressed for five seconds or longer) in a state where the front panel 10 is removed from the main device 20, a reset function activates.

In the present embodiment, Bluetooth Low Energy (BLE) is used as Bluetooth.

Magnets 20C used to attach the front panel 10 are disposed at the upper part and lower part of the front surface of the main device 20. The magnets 20C are provided at positions facing magnets 10C provided on the inner side of the front panel 10. When, for example, the magnets 10C of the front panel 10 are N-poles, the magnets 20C of the main device 20 side are S-poles. Due to the attraction between the magnets, the front panel 10 is detachably attached to the main device 20.

Any one of the magnet 10C and the magnet 20C may be iron or another magnetic piece of metal. Attachment of the front panel 10 to the main device 20 is detected by the Hall IC provided at the main device 20 side.

Other than the above, various electronic components needed to generate an aerosol are built in the main device 20. In this meaning, the main device 20 is an example of an electronic device specialized to generate an aerosol. In the narrow meaning, the main device 20 is referred to as aerosol generating device.

Other than the above, an LED 20A is disposed at the front surface of the main device 20. The LED 20A is used to display the status of the operation of the main device 20.

### <Internal Configuration>

Fig. 7 is a diagram that schematically illustrates the internal configuration of the aerosol generating device 1. Fig. 7 illustrates a state where the stick substrate 210 is set in the main device 20. The internal configuration illustrated in Fig. 7 aims to illustrate components provided in the front panel 10 and the main device 20 and a positional relationship of them. Therefore, the appearance of the components and the like illustrated in Fig. 7 does not necessarily coincide with the above-described appearance view.

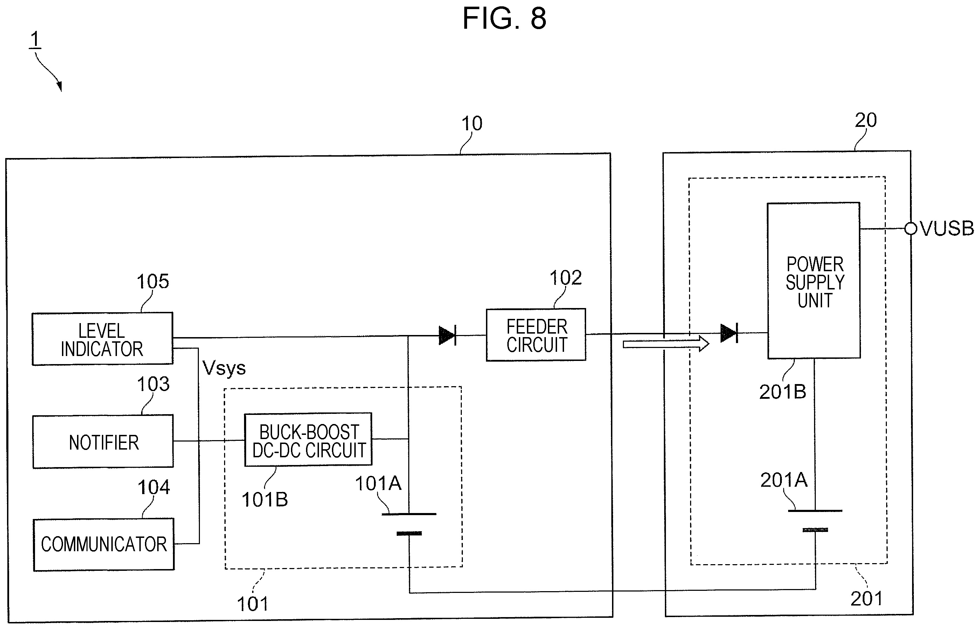

Fig. 8 is a diagram that schematically illustrates a connection relation between the front panel 10 and a power supply system circuit in the main device 20.

As illustrated in Fig. 7, the front panel 10 includes the power supply 101 that stores electricity, the feeder circuit 102 that supplies electric power from the power supply 101 to the main device 20 or the like, the notifier 103 that notifies the levels and the like of the batteries in the whole of the aerosol generating device 1, the communicator 104 that notifies the main device 20 of the level of the battery of the power supply 101, and the level indicator 105 that measures the level of the battery of the power supply 101.

Fig. 8 illustrates a case where the battery of the power supply 101 is a primary battery 101A. Here, the primary battery 101A is, for example, a lithium battery or an alkaline battery. The primary battery 101A is an example of the second battery. The primary battery 101A functions as a sub-battery or auxiliary battery for the secondary battery 201A of the main device 20 side.

The feeder circuit 102 is made up of, for example, a boost DC-DC circuit. The feeder circuit 102 is a circuit that supplies a constant voltage (for example, 5 V) to the main device 20 regardless of the output voltage of the power supply 101. A circuit that prevents backflow of current is provided in the feeder circuit 102.

In this regard, supply of electric power from the feeder circuit 102 to the main device 20 may be contact power supply or contactless power supply.

For example, a method with mechanical contact of an electrode, a method of mechanical contact with a spring-loaded electrode pin (pogo pin), or a method of coupling of a connector, is used for contact power supply.

For example, supply of electric power using an electromagnetic induction method, such as a Qi standard and a near field communication (NFC), or supply of electric power using an electric field induction method is used for contactless power supply.

The communicator 104 is a communication interface for implementing communication with the main device 20. The communicator 104 in the present embodiment notifies the main device 20 of the level of the primary battery 101A. The communicator 104 receives control data of the notifier 103 from the main device 20. The control data includes, for example, the number and positions of the segments that turn on and the number and positions of the segments that turn off in the notifier 103. Other than the above, the control data also includes instructions on blinking and luminescent colors of the LEDs.

The communicator 104 communicates with the main device 20 by using a system that conforms with a selected wired or wireless communication standard. Examples of the communication standard here include a wireless local area network (LAN), a serial signal line, Wi-Fi (registered trademark), and Bluetooth (registered trademark).

In the case of the present embodiment, communication with a smartphone of a user or a server is performed by the communicator 205 of the main device 20; however, the communicator 104 of the front panel 10 can also have a function for communicating with a device other than the main device 20.

The level indicator 105 is a circuit that calculates the level of the primary battery 101A in accordance with a power supply current IBAT, a power supply voltage VBAT, or the like, that appears in a power supply line of the primary battery 101A. Calculation of the level by the level indicator 105 may be performed, for example, at a predetermined period or timing or may be performed only when instructions are issued from the controller 206 of the main device 20. The calculated level is transmitted to the main device 20 through the communicator 104.

A system power supply Vsys needed for the operations of the notifier 103, the communicator 104, and the level indicator 105 is supplied from a buck-boost DC-DC circuit 101B.

The buck-boost DC-DC circuit 101B is a voltage conversion circuit that generates 3.3 V system power supply Vsys from the output voltage of the primary battery 101A and supplies the system power supply Vsys to the notifier 103, the communicator 104, and the level indicator 105. Therefore, the entire electric power needed for the operations of the notifier 103 and the like is supplied from the primary battery 101A of the front panel 10. In other words, electric power needed for the operations of the notifier 103 and the like provided in the front panel 10 does not need to be supplied from the secondary battery 201A of the main device 20.

On the other hand, the main device 20 includes the power supply 201, a sensor 202, a notifier 203, a memory 204, the communicator 205, the controller 206, the heater 207, a heat insulator 208, and a holder 209.

As described above, Fig. 7 illustrates a state where the stick substrate 210 is held by the holder 209. In this state, an aerosol is inhaled by a user.

The power supply 201 of the present embodiment is a unit that supplies electric power to the main device 20. The power supply 201, for example, stores electric power by using a lithium ion secondary battery or a capacitor. Fig. 8 illustrates an example in which electric power is stored in the secondary battery 201A. The secondary battery 201A is an example of the first battery.

The secondary battery 201A can be charged from an external power supply. In the case of the present embodiment, for example, a commercial power supply, a mobile battery, and the primary battery 101A of the front panel 10 are assumed as external power supplies.

Other than the above, a power supply unit 201B is provided in the power supply 201.

The power supply unit 201B switches a power supply path and converts a voltage level in accordance with an operation mode.

The power supply unit 201B outputs for example, 3.3 V (that is, "system power supply") to a power supply line to which the sensor 202, the notifier 203 (except the LED 20A), the memory 204, the communicator 205, and the controller 206 are connected.

The power supply unit 201B outputs, for example, 5 V to a power supply line to which the LED 20A is connected and outputs, for example, 4.2 V to a power supply line to which the heater 207 is connected.

When the secondary battery 201A is charged from an external power supply, the power supply unit 201B outputs, for example, 4.2 V to a power supply line to which the secondary battery 201A is connected.

External power supplies here include not only a commercial power supply and a mobile battery but also the primary battery 101A of the front panel 10.

Because a USB cable is used to supply electric power from a commercial power supply or a mobile battery, a feeder terminal corresponding to them is indicated by VUSB in Fig. 8.

The sensor 202 is an electronic component that detects various pieces of information on the main device 20.

Examples of the sensor 202 include a pressure sensor, such as a microphone capacitor, and a flow sensor. The sensor 202 serving as a sensor outputs detected information to the controller 206. When, for example, a change in atmospheric pressure resulting from inhalation or flow of air is detected, the sensor 202 outputs a numeric value indicating inhalation of a user to the controller 206.

The sensor 202 is, for example, an input device that receives input from a user. The input device is, for example, a button or a switch. In the present embodiment, the button 20B (see Fig. 5) is used as the input device.

The button 20B is used to, for example, switch the on and off states of a main power or switch the start and stop of power supply to the heater 207 (that is, the start and stop of generating an aerosol).

The content of instructions of a user is output from the sensor 202 to the controller 206. The button 20B is not only an example of the button but also an example of the switch.

Other than the above, the sensor 202 can be a temperature sensor that detects the temperature of the heater 207. The temperature sensor, for example, detects the temperature of the heater 207 in accordance with the electric resistance value of a conductive track of the heater 207. The detected electric resistance value is output from the sensor 202 to the controller 206. The controller 206 calculates the temperature of the heater 207 in accordance with the electric resistance value. In other words, the controller 206 calculates the temperature of the stick substrate 210 held by the holder 209.

Other than the above, the sensor 202 can be a capacitance sensor, an optical sensor, a pressure sensor, or the like, that detects insertion of the stick substrate 210 to the holder 209.

The sensor 202 can be an optical color sensor, a radio frequency identification (RFID) reader, or the like, for individual identification of the stick substrate 210.

The sensor 202 can be a biometric sensor that measures the heart rate or the like of a user, a fingerprint sensor used to unlock, or the like.

The sensor 202 can be an acceleration sensor, a gyro sensor, or the like, that detects the motion of a user.

The notifier 203 is an electronic component that notifies a user of various pieces of information on the main device 20. The notifier 203 can be the LED 20A or another light-emitting device. For example, the LED 20A emits light in a different pattern when the power supply 201 needs to be charged, when the power supply 201 is being charged, or when there is an abnormality in the main device 20.

Patterns here include a difference in color, a difference in timing for turning on or turning off, and the like.

However, when the front panel 10 with the notifier is attached to the main device 20 as illustrated in Fig. 1, the LED 20A is controlled to an off state. This is because the notifier 103 can substitute for the function of the LED 20A. This is also to reduce electric power consumption.

When the front panel 10 in which a window or a slit that transmits light is provided at a position facing the LED 20A is attached to the main device 20, the LED 20A is controlled to turn on.

The notifier 203 may be made up of a display device that displays an image, a sound output device that outputs sound, a vibration device that vibrates the main device 20, or the like, together with the above-described light-emitting device or instead of the light-emitting device. The light-emitting device, the display device, the sound output device, the vibration device, and the like are examples of the notifier that notifies information.

Other than the above, the notifier 203 may notify a user of a state where inhalation of an aerosol is allowed. This notification is provided when the temperature of the stick substrate 210 heated by the heater 207 reaches a predetermined temperature.

The memory 204 stores various pieces of information regarding the operation of the main device 20. The memory 204 is, for example, a non-volatile storage medium, such as a flash memory.

Examples of the information stored in the memory 204 include an operating system (OS), firmware (FW), and other programs.

Examples of the information stored in the memory 204 include information on control over electronic components. The information on control is information on inhalation of a user, such as the number of times of inhalation, inhalation time, and an accumulated inhalation time period.

The communicator 205 is a communication interface for implementing communication between the main device 20 and another device. The communicator 205 communicates with another device in a system that conforms with a selected wired or wireless communication standard. Examples of the communication standard here include a wireless local area network (LAN), a wired LAN, Wi-Fi (registered trademark), and Bluetooth (registered trademark).

For example, the communicator 205 transmits information on inhalation of a user to a smartphone. The communicator 205 downloads from a server an update program and a profile that defines a change in the temperature of the heater 207 in a heating mode. The communicator 205 transmits the start or stop of power supply to the feeder circuit 102.

The controller 206 functions as an arithmetic processing unit and a control device and controls the operation of the main device 20 in accordance with various programs. The controller 206 may control the operation of the feeder circuit 102 provided in the front panel 10.

A control signal is transmitted through a signal line different from the power supply line. For example, a serial communication method, such as an inter-integrated circuit (I2C) communication method, a serial peripheral interface (SPI) communication method, and a universal asynchronous receiver transmitter (UART) communication method, is used for communication in the main device 20. The SPI communication method or the UART communication method is used for communication with the feeder circuit 102 of the front panel 10. For example, BLE is used as a communication line.

The controller 206 is implemented by, for example, an electronic circuit, such as a central processing unit (CPU), a micro processing unit (MPU), a graphical processing unit (GPU), an application specific integrated circuit (ASIC), a field programmable gate array (FPGA), and a digital signal processor (DSP).

The controller 206 may include a read only memory (ROM) that stores programs, computation parameters, and the like and a random access memory (RAM) that temporarily stores parameters and the like that vary as needed.

The controller 206 executes various processes and controls through running programs.

Examples of the processes and controls here include supplying electric power from the power supply 201 to another electronic component, charging the power supply 201, detecting information with the sensor 202, notifying information with the notifier 203, storing and reading information with the memory 204, and transmitting and receiving information by the communicator 205. Communication performed by the communicator 205 also includes communication with the front panel 10.

Other than the above, the controller 206 also controls input of information to an electronic component, a process based on information output from an electronic component, and the like.

The holder 209 is a substantially cylindrical casing. In the present embodiment, a space inside the holder 209, defined by an inner wall and a bottom surface, is referred to as an internal space 209A. The internal space 209A has a substantially columnar shape.

The holder 209 has an opening 209B that communicates the internal space 209A with an outside. The stick substrate 210 is inserted into the internal space 209A through the opening 209B. The stick substrate 210 is inserted until its distal end contacts with a bottom 209C.

The stick substrate 210 is only partially accommodated in the internal space 209A. A state where the stick substrate 210 is accommodated in the internal space 209A is referred that the stick substrate 210 is held in the internal space 209A.

The holder 209 is formed such that the inside diameter of at least part of the holder 209 in an axial direction is smaller than the outside diameter of the stick substrate 210.

Therefore, an outer periphery of the stick substrate 210 inserted in the internal space 209A receives pressure from the inner wall of the holder 209. With this pressure, the stick substrate 210 is held in the internal space 209A.

The holder 209 also has the function to define a flow path for air passing through the stick substrate 210. An air inlet hole that is an inlet for air into the flow path is disposed at, for example, the bottom 209C. The opening 209B is an air outlet hole that is an outlet for air.

In the case of the present embodiment, only part of the stick substrate 210 is held by the holder 209, and the remaining part protrudes outward from a casing. Hereinafter, the part held by the holder 209 is referred to as substrate 210A, and the part protruding from the casing is referred to as inhalation port 210B.

An aerosol source is housed in at least the substrate 210A. The aerosol source is a material that is atomized when heated to generate an aerosol.

The aerosol source contains not only shredded tobacco but also a substance derived from tobacco, such as a processed substance and the like obtained by forming tobacco raw material into a granular form, a sheet form, or a powder form.

Furthermore, the aerosol source may contain a substance not derived from tobacco and produced from a plant other than tobacco, such as mint and a herb. For example, the aerosol source may contain a flavoring agent component, such as menthol.

When the main device 20 is a medical inhaler, the aerosol source may contain a medicine for a patient to inhale. The aerosol source is not limited to a solid and may be, for example, a polyhydric alcohol or a liquid, such as water. Examples of the polyhydric alcohol include glycerine and propylene glycol.

At least part of the inhalation port 210B is held in the mouth of a user during inhalation.

When the user inhales with the inhalation port 210B in his or her mouth, air flows into the internal space 209A through the air inlet hole. Air flowing in passes through the internal space 209A and the substrate 210A and reaches the inside of the mouth of the user. Air that reaches the inside of the mouth of the user contains an aerosol generated in the substrate 210A.

The heater 207 is made up of a heater or another heat generator. The heater 207 is made of a selected raw material, such as a metal and polyimide. The heater 207 is formed in, for example, a film shape and attached to the outer periphery of the holder 209.

When the heater 207 produces heat, the aerosol source included in the stick substrate 210 is heated and atomized. The atomized aerosol source is mixed with air or the like to generate an aerosol.

In the case of Fig. 7, a part around the outer circumference of the stick substrate 210 is initially heated, and a range heated gradually moves to around the center.

Therefore, atomization of the aerosol source begins around the outer circumference of the stick substrate 210 and gradually moves to around the center.

The heater 207 produces heat by using electric power supplied from the power supply 201. When, for example, predetermined user input is detected through the sensor 202, supply of electric power to the heater 207 is permitted. User input here is operation to the shutter 30 (see Fig. 1) or the button 20B (see Fig. 5). However, supply of electric power to the heater 207 needs a precondition that the front panel 10 (see Fig. 1) is attached to the main device 20. By attaching the front panel 10, a temperature transferred to the hand of a user can be decreased as compared to when the front panel 10 is not attached.

When the temperature of the stick substrate 210 heated by the heater 207 reaches a predetermined temperature, inhalation by a user is allowed. Inhalation of an aerosol by a user is detected by a flow sensor or the like of the sensor 202, and is saved in the memory 204.

After that, when the predetermined user input is detected by the sensor 202, supply of electric power to the heater 207 is stopped. A method in which electric power is supplied to the heater 207 in a period during which inhalation by a user is detected by the sensor 202 and electric power supplied to the heater 207 is stopped when inhalation by the user is not detected by the sensor 202 may be adopted.

In the example of Fig. 7, the heater 207 is disposed outside the stick substrate 210. Alternatively, the heater 207 may be a blade-type piece of metal inserted into the stick substrate 210 for use or may be a piece of metal built in the stick substrate 210. When a piece of metal that acts as the heater 207 is built in the stick substrate 210, an induction heating coil just needs to be disposed around the holder 209.

The heat insulator 208 is a member that reduces propagation of heat generated in the heater 207 to surroundings. Therefore, the heat insulator 208 is disposed so as to cover at least the outer periphery of the heater 207.

The heat insulator 208 is made of, for example, a vacuum heat insulator, an aerogel heat insulator, or the like. A vacuum heat insulator is, for example, a heat insulator of which heat conduction by gas is brought close to zero as much as possible by wrapping glass wool, silica (silicon powder), and the like with a resin film into a high-vacuum state.

### <Processing Operation Example>

Hereinafter, a processing operation example that is executed by the controller 206 (see Fig. 7) will be described.

### <Attachment Detection Operation>

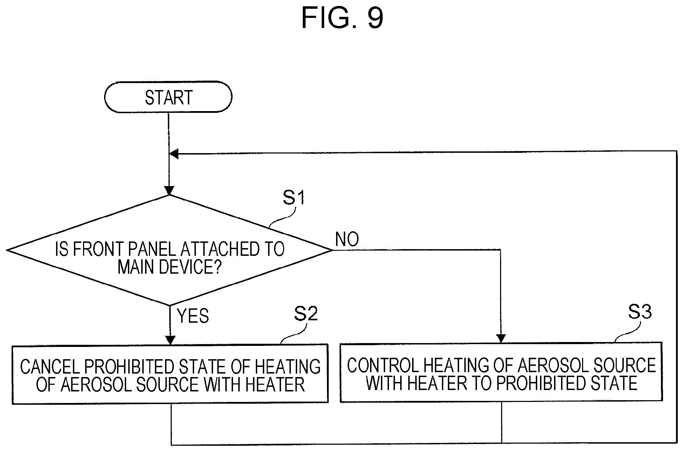

Fig. 9 is a flowchart that illustrates an example of a front panel attachment detection operation that is executed by the controller 206. The operation is an operation that is executed not only before heating operation of the heater 207 (see Fig. 7) is started but also after heating is started and is constantly executed in a background. A sign "S" shown in the drawing means step.

Initially, the controller 206 determines whether the front panel 10 (see Fig. 1) is attached to the main device 20 (see Fig. 1) (step 1).

When the front panel 10 is attached to the main device 20, an affirmative result is obtained in step 1. On the other hand, when removed from the front panel 10 from the front of the main device 20, a negative result is obtained in step 1. Attachment or removal of the front panel 10 is determined in accordance with an output signal of the Hall IC.

When an affirmative result is obtained in step 1, the controller 206 cancels a prohibited state of heating of an aerosol source with the heater 207 (step 2).

However, cancellation of a prohibited state of heating and start of heating are different. Heating of the stick substrate 210 (see Fig. 7) that is an aerosol source is started when the button 20B (see Fig. 5) is pressed from the front panel 10 and held for a second or longer.

When a negative result is obtained in step 1, the controller 206 controls heating of an aerosol source with the heater 207 to a prohibited state (step 3).

When step 2 or step 3 is executed, the controller 206 returns to step 1 and repeats the determination as to whether the front panel 10 is attached to the main device 20.

With this attachment detection pre-operation, a user does not need to directly touch the main device 20 during heating operation.

### <Indication of Total Value of Levels>

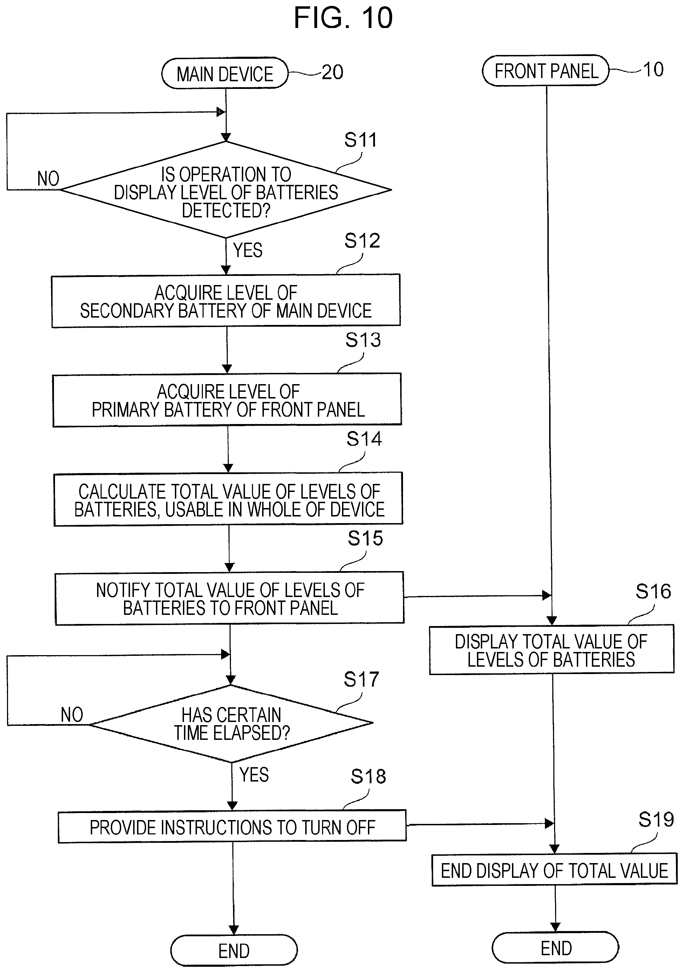

Fig. 10 is a flowchart that illustrates an example of a processing operation related to a function of displaying a total value of the level of the primary battery 101A (see Fig. 8) of the front panel 10 and the level of the secondary battery 201A (see Fig. 8) of the main device 20.

In the case of the present embodiment, display of the total value by the notifier 103 (see Fig. 8) of the front panel 10 is implemented by processing of the controller 206 (see Fig. 8) of the main device 20.

Initially, the controller 206 determines whether operation of display of the levels of the batteries is detected (step 11). The operation here is, for example, operation to open the shutter 30 (see Fig. 1), double pressing of the button 20B, and instructions from a smartphone.

When operation that is a target for detection is not detected, a negative result is obtained in step 11. In this case, the controller 206 repeats the determination of step 11.

When operation that is a target for detection is detected, an affirmative result is obtained in step 11. In this case, the controller 206 acquires the level of the secondary battery 201A of the main device 20 (step 12). The level here can be acquired from a level indicator (not shown) provided in the main device 20. The configuration of the level indicator may be the same as that of the level indicator 105 provided in the front panel 10.

Subsequently, the controller 206 acquires the level of the primary battery 101A of the front panel 10 (step 13). Specifically, information about the level calculated in the level indicator 105 provided in the front panel 10 is acquired through communication.

Subsequently, the controller 206 calculates the total value of the levels of the batteries usable in the whole of the device (step 14). A process of converting the level of the primary battery 101A of the front panel 10 into the unit of the level of the secondary battery 201A of the main device 20 is executed. In the present embodiment, for the sake of easy description, it is assumed that the amount of electric power of the primary battery 101A in a full state of charge is the same as the amount of electric power of the secondary battery 201A in a full state of charge. In this case, the total value of the levels of the batteries can be calculated from the sum of the two levels.

When the total value is calculated, the controller 206 notifies the total value of the levels of the batteries to the front panel 10 (step 15). In the case of the present embodiment, the total value of the levels of the batteries is notified to the notifier 103 (see Fig. 7) in the format of the number and positions of the segments to be turned on. The controller 206 starts measuring an elapsed time simultaneously with notification of step 15.

The front panel 10 having received the notification displays the total value of the levels of the batteries (step 16). This display is implemented by turning-on of the segments that make up the notifier 103.

After that, the controller 206 determines whether a certain time has elapsed (step 17).

The certain time here is predetermined as a time indicating the total value of the levels of the batteries.

While the certain time has not elapsed, a negative result is obtained in step 17. In this case, the controller 206 repeats the determination of step 17. In contrast, when a lapse of the certain time is detected, an affirmative result is obtained in step 17. In this case, the controller 206 instructs the front panel 10 to turn off (step 18). The front panel 10 having received the instructions ends display of the total value (step 19).

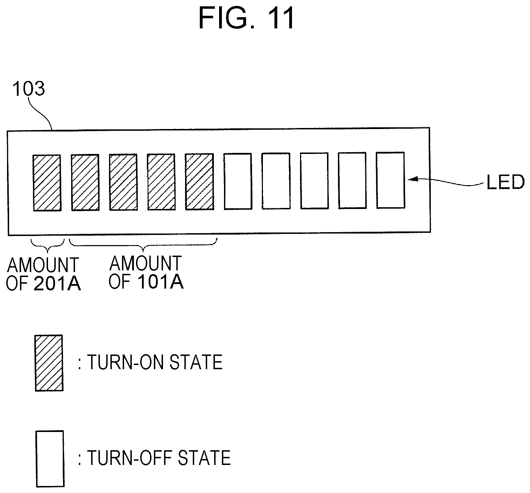

Fig. 11 is a diagram that illustrates a display example of the level of the batteries, usable in the whole of the aerosol generating device 1.

In the case of Fig. 11, five segments are turned on. A user having a look at this display recognizes that the level of the batteries is a half of the level in a full state of charge.

In the case of the present embodiment, the level of the batteries, displayed by the notifier 103, is the total value of the level of the secondary battery 201A of the main device 20 and the level of the primary battery 101A of the front panel 10.

In this regard, in the case of Fig. 11, the level of the secondary battery 201A of the main device 20 is one segment, and the level of the primary battery 101A of the front panel 10 is four segments. Therefore, five segments are turned on. In the case of Fig. 11, a breakdown of the level of the batteries is not displayed.

### <Auxiliary Charging Operation>

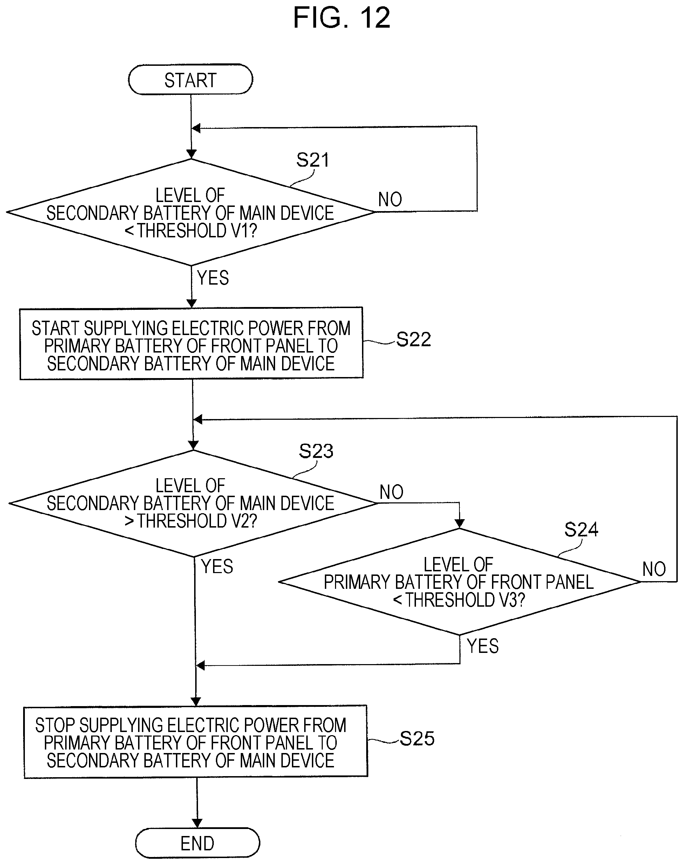

Fig. 12 is a flowchart that illustrates an operation (that is, auxiliary charging) in which the secondary battery 201A of the main device 20 is charged by the primary battery 101A of the front panel 10. The auxiliary charging operation is also constantly executed in the background.

The controller 206 determines whether the level of the secondary battery 201A of the main device 20 is lower than a threshold V1 (step 21). The threshold V1 here is an example of a predetermined reference.

When the level is higher than or equal to the threshold V1, a negative result is obtained in step 21. When a negative result is obtained in step 21, the controller 206 repeats the determination of step 21.

On the other hand, when the level is lower than the threshold V1, an affirmative result is obtained in step 21. In this case, the controller 206 starts supplying electric power from the primary battery 101A of the front panel 10 to the secondary battery 201A of the main device 20 (step 22).

In the case of the present embodiment, the controller 206 instructs the feeder circuit 102 of the front panel 10 to start supplying electric power. As a result, a voltage boosted to, for example, 5 V is supplied from the output terminal of the feeder circuit 102 to the power supply unit 201B (see Fig. 8) of the main device 20. The power supply unit 201B performs DC-DC conversion from a voltage of 5 V supplied from the primary battery 101A as an external power supply to 4.2 V and supplies 4.2 V to the power supply line to which the secondary battery 201A is connected.

Thus, charging of the secondary battery 201A of the main device 20 is started.

Subsequently, the controller 206 determines whether the level of the secondary battery 201A of the main device 20 is higher than a threshold V2 (> V1) (step 23).

When the level of the secondary battery 201A is lower than or equal to the threshold V2, a negative result is obtained in step 23. On the other hand, when the level of the secondary battery 201A is higher than the threshold V2, an affirmative result is obtained in step 23.

When a negative result is obtained in step 23, the controller 206 determines whether the level of the primary battery 101A of the front panel 10 is lower than a threshold V3 (step 24). The threshold V3 here defines the timing to stop supplying electric power from the front panel 10 to the main device 20.

When the level of the primary battery 101A of the front panel 10 is higher than or equal to the threshold V3, a negative result is obtained in step 24. On the other hand, when the level of the primary battery 101A of the front panel 10 is lower than the threshold V3, an affirmative result is obtained in step 24.

When a negative result is obtained in step 24, the controller 206 returns to step 23 and repeats the determination of step 23.

When an affirmative result is obtained in step 23 or when an affirmative result is obtained in step 24, the controller 206 stops supplying electric power from the primary battery 101A of the front panel 10 to the secondary battery 201A of the main device 20 (step 25).

A case where an affirmative result is obtained in step 23 is a case where the level of the secondary battery 201A of the main device 20 is recovered to a target level. On the other hand, a case where an affirmative result is obtained in step 24 is a case where the level of the primary battery 101A of the front panel 10 is low.

After that, the controller 206 ends charging the secondary battery 201A of the main device 20 using the primary battery 101A of the front panel 10 as an external power supply.

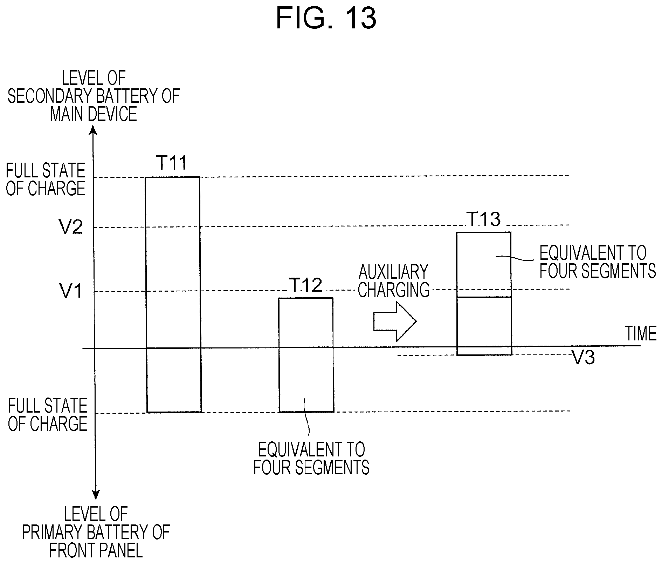

Fig. 13 is a timing chart that illustrates auxiliary charging that uses the primary battery 101A of the front panel 10 as an external power supply.

The abscissa axis of the timing chart represents time, the upper half of the ordinate axis represents the level of the secondary battery 201A in the main device 20, and the lower half of the ordinate axis represents the level of the primary battery 101A in the front panel 10.

In the case of Fig. 13, the primary battery 101A and the secondary battery 201A in an initial state T11 both are in a full state of charge.

Time T12 of Fig. 13 indicates a state where the level of the secondary battery 201A of the main device 20 is lower than the threshold V1. The primary battery 101A of the front panel 10 remains in a full state of charge. The level of the primary battery 101A of the front panel 10 can be decreased.

Auxiliary charging is started from time T12. By performing auxiliary charging, the level of the primary battery 101A of the front panel 10 decreases, while, on the other hand, the level of the secondary battery 201A of the main device 20 increases.

In the case of Fig. 13, charging is stopped because the level of the primary battery 101A of the front panel 10 serving as an external power supply is lower than the threshold V3 although the level of the secondary battery 201A of the main device 20 has not reached the threshold V2.

### <USB Charging Operation>

Incidentally, charging of the secondary battery 201A of the main device 20 is possible by connecting a USB cable.

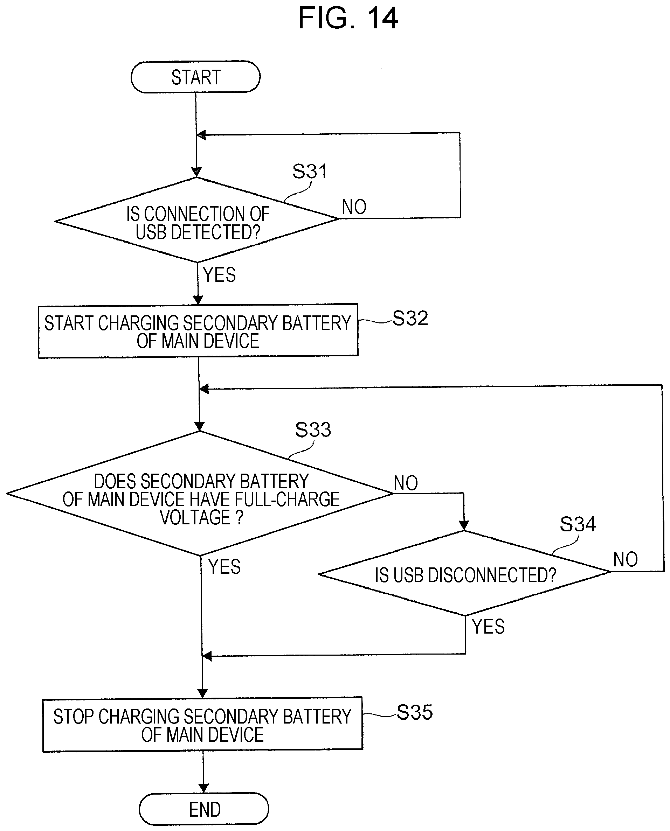

Fig. 14 is a flowchart that illustrates an example of a USB charging operation that is executed by the controller 206. The USB charging operation is also constantly executed in the background.

Initially, the controller 206 determines whether connection of USB is detected (step 31).

When a USB cable is not connected to the USB connector 21, a negative result is obtained in step 31. In this case, the controller 206 repeats the determination of step 31.

On the other hand, when a USB cable is connected to the USB connector 21 (see Fig. 2), an affirmative result is obtained in step 31. In this case, the controller 206 starts charging the secondary battery 201A of the main device 20 (step 32).

Subsequently, the controller 206 determines whether the secondary battery 201A of the main device has a full-charge voltage (step 33).

When the secondary battery 201A has not reached the full-charge voltage, a negative result is obtained in step 33. On the other hand, when the secondary battery 201A has reached the full-charge voltage, an affirmative result is obtained in step 33.

When a negative result is obtained in step 33, the controller 206 determines whether the USB cable is disconnected (step 34).

When the USB cable remains connected, a negative result is obtained in step 34. On the other hand, when the USB cable is disconnected during charging, an affirmative result is obtained in step 34.

When a negative result is obtained in step 34, the controller 206 returns to step 33 and repeats the determination of step 33.

When an affirmative result is obtained in step 33 or when an affirmative result is obtained in step 34, the controller 206 stops charging the secondary battery 201A of the main device 20 (step 35).

After that, the controller 206 ends the USB charging operation.

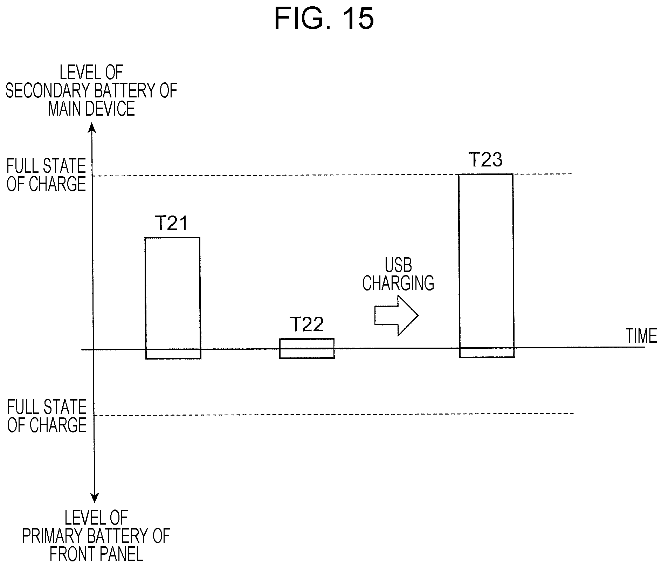

Fig. 15 is a timing chart that illustrates a USB charging operation.

The abscissa axis of the timing chart represents time, the upper half of the ordinate axis represents the level of the secondary battery 201A in the main device 20, and the lower half of the ordinate axis represents the level of the primary battery 101A in the front panel 10.

In the case of Fig. 15, the primary battery 101A and the secondary battery 201A in an initial state T21 both are not in a full state of charge. Particularly, the primary battery 101A of the front panel 10 is in a state close to dead.

Time T22 indicates a state where the level of the secondary battery 201A of the main device 20 has decreased. The level of the secondary battery 201A is almost zero.

When the USB cable is connected in this state, USB charging is started.

As a result, the secondary battery 201A returns to a full state of charge at time T23 when USB charging ends. In the case of the present embodiment, since the battery of the front panel 10 is the primary battery 101A, recovery of electric power through USB charging is not performed. To recover electric power of the front panel 10, replacement of the primary battery 101A is needed.

### <Summary>

As described above, the front panel 10 that has the built-in primary battery 101A can be attached to the main device 20 (see Fig. 1) described in the present embodiment. When the front panel 10 that has the built-in primary battery 101A is attached to the main device 20, the secondary battery 201A of the main device 20 can be charged by using the primary battery 101A as an external power supply. As a result, the usage time of the main device 20 is longer than that in a case where the front panel 10 that does not have the built-in primary battery 101A is attached.

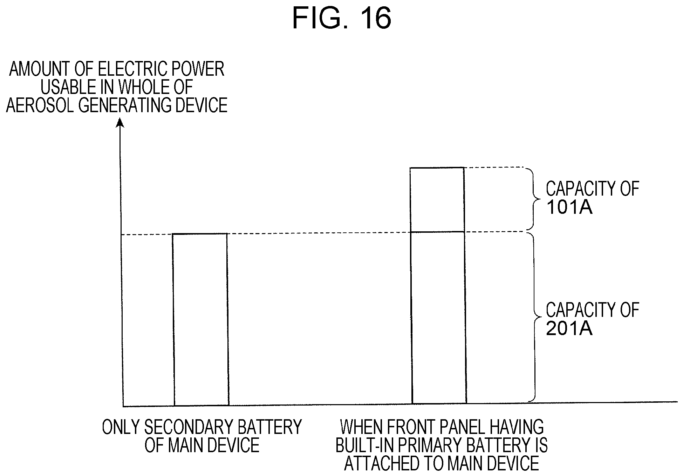

Fig. 16 is a graph that illustrates the amount of electric power usable in the whole of the aerosol generating device 1.

The ordinate axis of the graph represents the amount of electric power usable in the whole of the aerosol generating device 1.

As illustrated in Fig. 16, as compared to the case of only the secondary battery 201A of the main device 20, the amount of electric power usable increases when the front panel 10 that has the built-in primary battery 101A is attached to the main device 20.

A user who attaches the battery-mounted front panel 10 to the main device 20 is interested in the amount of consumption of the battery to date as the whole of the aerosol generating device 1 or the current level, and a breakdown of the level of each battery is secondary.

To respond to the interest of a user, the front panel 10 of the present embodiment includes the notifier 103 (see Fig. 1) that indicates in the number of segments the total value of the level of the secondary battery 201A (see Fig. 8) of the main device 20 and the level of the primary battery 101A (see Fig. 8) of the front panel 10.

Therefore, a user is able to easily grasp the total value of the levels of the batteries, usable in the whole of the aerosol generating device 1.

### <Second Embodiment>

In the present embodiment, a correction function for the amount of electric power usable, that is, the level of the battery, according to a difference in a power supply path from the front panel 10 to the main device 20 will be described.

The internal configuration and appearance configuration of the aerosol generating device 1 are common to those of the first embodiment.

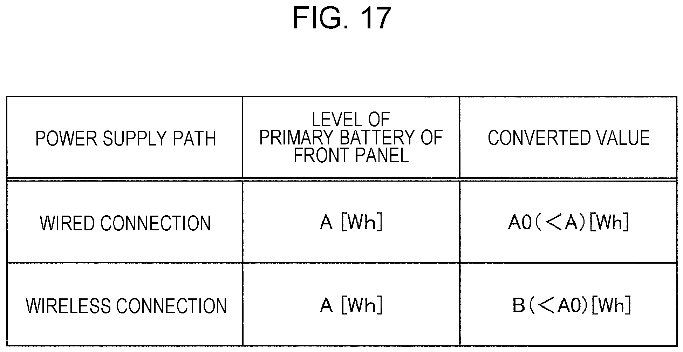

Fig. 17 is a table that illustrates a relationship between the level of the primary battery 101A of the front panel 10 used as an auxiliary power supply and a level usable in the main device 20.

The table illustrated in Fig. 17 shows a case where a power supply path is wired connection and a case where a power supply path is wireless connection. Only any one of wired connection and wireless connection is used to supply electric power between the front panel 10 and the main device 20. Therefore, a relation according to a power supply path used just needs to be saved in the memory 204 or the controller 206 of the main device 20.

Basically, the power supply efficiency of wired connection is higher than the power supply efficiency of wireless connection, and losses in a power supply line can be mostly ignored.

Therefore, in the example of Fig. 17, when the level of the primary battery 101A of the front panel 10 is A [Wh], a converted value of electric power usable in the main device 20 is A0 (< A) [Wh]. For example, A0 is substantially 90% of A.

On the other hand, in the case of wireless connection, even when the level of the primary battery 101A of the front panel 10 is A [Wh], a converted value of electric power usable in the main device 20 is B (< A0) [Wh]. A converted value B here depends on power supply efficiency.

For example, in the case of an electromagnetic induction method or an electric field coupling method, the power supply efficiency is lower than or equal to about 90%. In the case of a magnetic resonance method, the power supply efficiency is lower than or equal to about 60%.

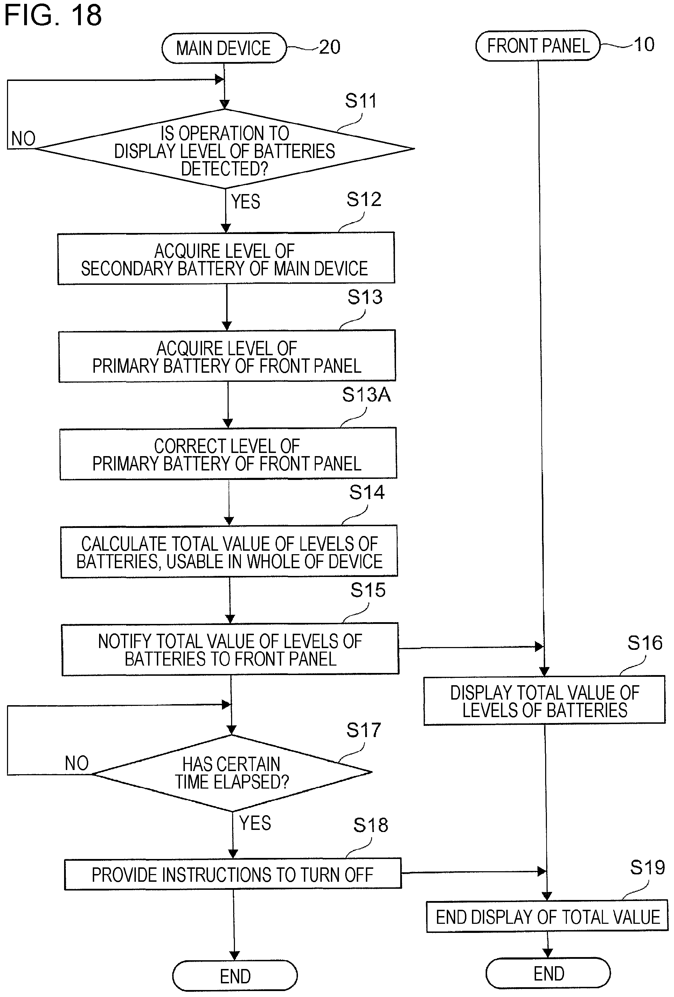

Fig. 18 is a flowchart that illustrates another example of a processing operation related to a function of displaying a total value of the level of the primary battery 101A (see Fig. 8) of the front panel 10 and the level of the secondary battery 201A (see Fig. 8) of the main device 20. Fig. 18 assigns corresponding reference signs to corresponding parts of Fig. 10.

Execution of the processing operation illustrated in Fig. 18 is, for example, needed only when wireless connection is used to supply electric power from the front panel 10 to the main device 20. When the level is accurately calculated even in wired connection, the processing operation illustrated in Fig. 18 can be executed.

In the case of the processing operation illustrated in Fig. 18, the controller 206 corrects the level of the primary battery 101A of the front panel 10 between step 13 and step 14 (step 13A).

In step 14 and the following steps, the corrected level is used to calculate the total value of the levels of the batteries, and the total value is displayed by the notifier 103.

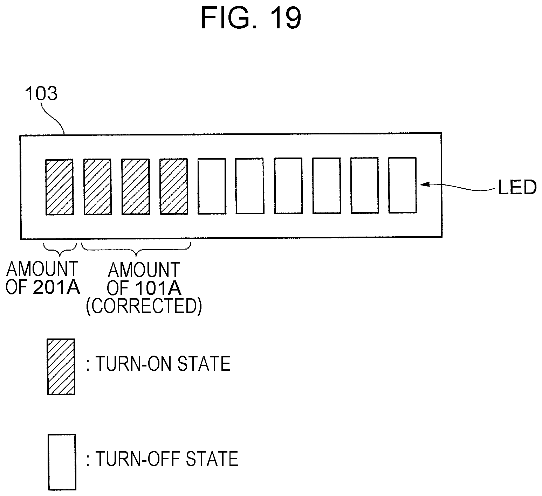

Fig. 19 is a diagram that illustrates a display example of the level of the batteries, usable in the whole of the aerosol generating device 1. Fig. 19 assigns corresponding reference signs to corresponding parts of Fig. 11.

In the case of Fig. 19, the corrected level is used as the level of the primary battery 101A of the front panel 10. Specifically, the corrected level is three segments. Therefore, in the notifier 103, the four segments including one segment that is the level of the secondary battery 201A of the main device 20 are turned on.

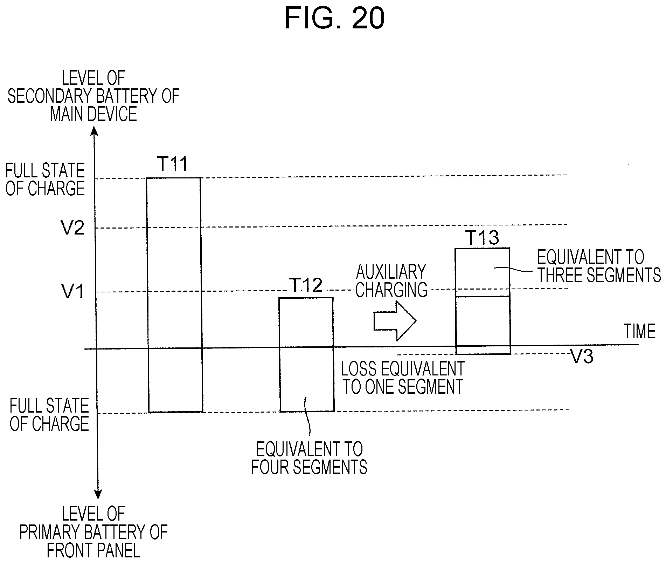

Fig. 20 is a timing chart that illustrates auxiliary charging that uses the primary battery 101A of the front panel 10 as an external power supply. Fig. 20 assigns corresponding reference signs to corresponding parts of Fig. 13.

In the case of Fig. 20 as well, the level of the primary battery 101A of the front panel 10 at time T12 when auxiliary charging is performed is four segments.

However, when auxiliary charging is performed, a loss of one segment occurs in a power supply path from the front panel 10 to the main device 20. Therefore, an increase in the level at time T13 when auxiliary charging is ended is limited to three segments.

In the case of the present embodiment, the level of the batteries, usable in the whole of the aerosol generating device 1, is displayed by correcting the level of the primary battery 101A in the front panel 10 to the amount of electric power usable after electric power is supplied to the main device 20, so the level of the batteries actually usable is not excessively displayed. As a result, it is possible to make a user having checked display of the level not to make an erroneous determination. In other words, it is possible to display a usable net level.

### <Third Embodiment>

In the present embodiment, another example of the notifier 103 will be described.

The internal configuration and appearance configuration of the aerosol generating device 1 are common to those of the first embodiment.

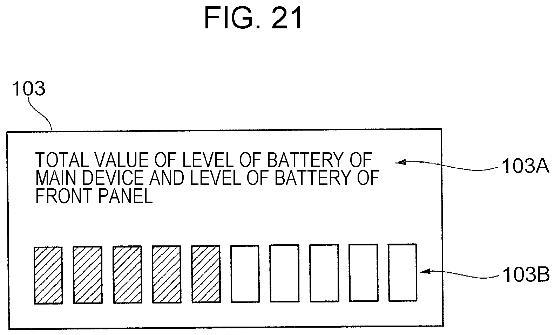

Fig. 21 is a diagram that illustrates another configuration example of the notifier 103 provided in the front panel 10. The notifier 103 in the present embodiment differs from the configuration assumed in the first and second embodiments in that not only a display field 103B for the level of the batteries being displayed but also its explanatory text 103A is provided.

The notifier 103 illustrated in Fig. 21 has such a configuration that a display for the explanatory text 103A that shows a fixed sentence, such as "the total value of the level of the battery of the main device and the level of the battery of the front panel", is added to the notifier 103 that is a component illustrated in Fig. 3.

The notifier 103 may be a liquid crystal display, an organic electro luminescence (EL) display, a micro light emitting diode (LED) display, or another display device, and may display an image notified from the main device 20.

When the whole of the notifier 103 is made up of a liquid crystal display or the like, information other than the level of the batteries can also be displayed.

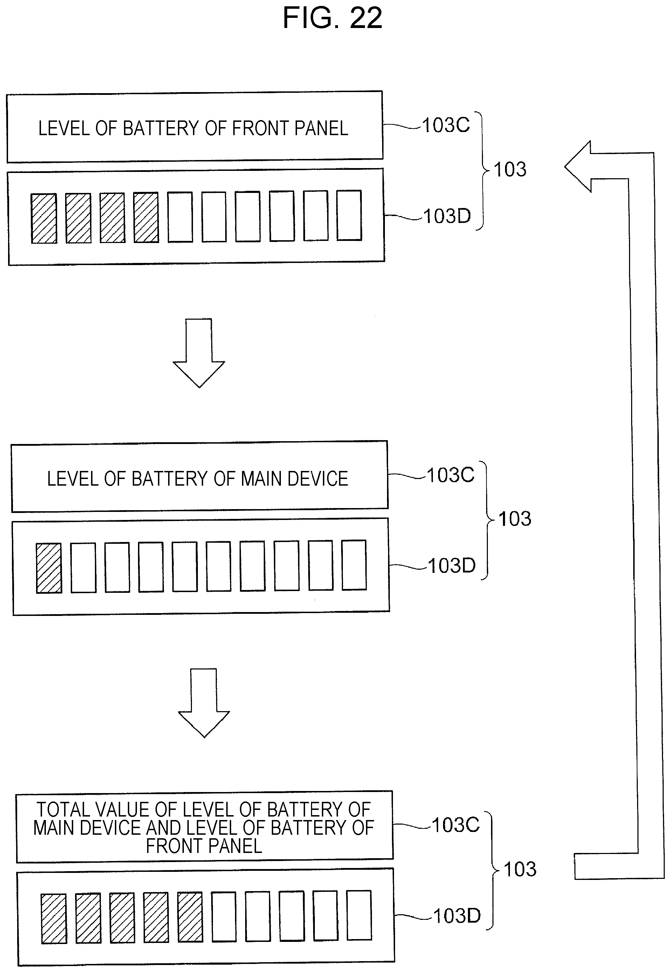

Fig. 22 is a diagram that illustrates another configuration example of the notifier 103 provided in the front panel 10. The notifier 103 illustrated in Fig. 22 is made up of a liquid crystal display 103C and a display 103D made up of 10 segments. The configuration of the display 103D is the same as the configuration illustrated in Fig. 3.

Fig. 22 illustrates an example of sequentially switching among a display mode in which "the level of the battery of the front panel" with the number of segments, a display mode in which "the level of the battery of the main device" is displayed with the number of segments, and a display mode in which "the total value of the level of the main device and the level of the front panel" is displayed, by utilizing such a feature that display of explanatory text can be changed.

Switching of the display mode here may be, for example, performed in response to opening and closing of the shutter 30 as one unit.

Switching of the display mode may be performed in response to double pressing of the button 20B as one unit. Switching of the display mode may be performed in response to instructions from a smartphone.

In the case of Fig. 22, when three-type levels are sequentially displayed, display shifts to the levels in the second round. In other words, the level of the front panel 10 is displayed subsequently to display of the total value.

When a specific level intended to be displayed is instructed from a smartphone or the like, the designated level may be displayed regardless of display immediately before.

When the whole of the notifier 103 is made up of a liquid crystal display or the like, switching of the level is performed as switching of an image notified from the controller 206.

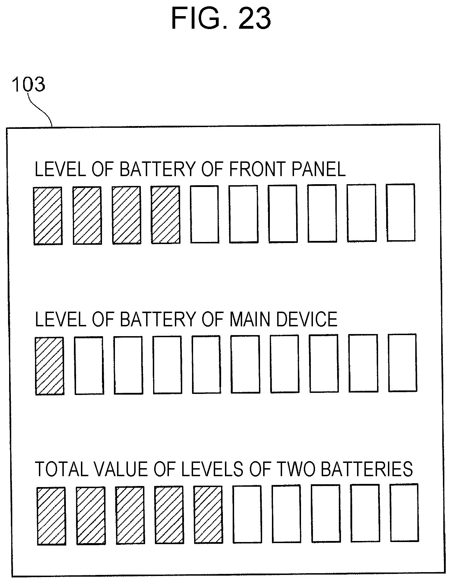

Fig. 23 is a diagram that illustrates a display example in a case where the whole of the notifier 103 is made up of a liquid crystal display or the like.

In the case of Fig. 23, "the level of the battery of the front panel", "the level of the battery of the main device", and "the total value of the levels of the two batteries" are displayed in one screen.

A user who sees the display illustrated in Fig. 23 is able to grasp not only the total value of the levels of the batteries, usable in the whole of the aerosol generating device 1, but also a breakdown of the levels of the two batteries at the same time. In the example of Fig. 23, it is found that the level of the secondary battery 201A of the main device 20 is low and, therefore, USB charging is needed in the near future.

When the level of the primary battery 101A of the front panel 10 is low, it can be found that replacement of the primary battery 101A is needed in the near future.

The notifier 103 illustrated in Fig. 23 may be implemented in combination with the structure illustrated in Fig. 21.

### <Fourth Embodiment>

In the present embodiment, a case where a secondary battery capable of charging the front panel 10 is provided will be described.

The appearance configuration of the aerosol generating device 1 is common to the first embodiment.

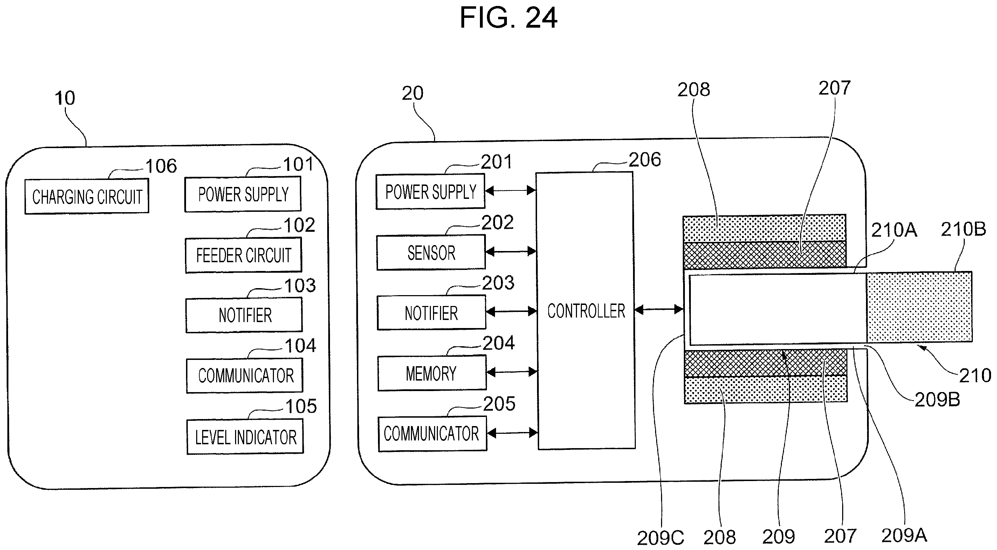

Fig. 24 is a diagram that schematically illustrates the internal configuration of the aerosol generating device 1. Fig. 24 assigns corresponding reference signs to corresponding parts of Fig. 7.

In the case of Fig. 24, a charging circuit 106 is added to the front panel 10. The other configuration is the same as that of the front panel 10 illustrated in Fig. 7.

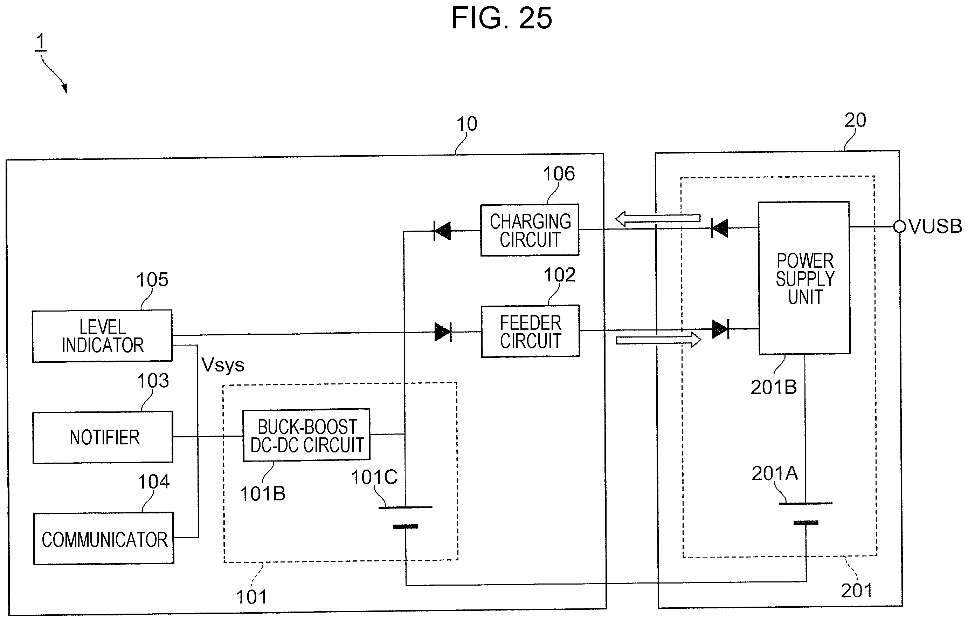

Fig. 25 is a diagram that schematically illustrates a connection relation between the front panel 10 and a power supply system circuit in the main device 20. Fig. 25 assigns corresponding reference signs to corresponding parts of Fig. 8.

In the case of Fig. 25, the power supply 101 includes a secondary battery 101C. Here, the secondary battery 101C is, for example, a lithium ion secondary battery. The secondary battery 101C is an example of the second battery. The secondary battery 101C also functions as a sub-battery or auxiliary battery for the secondary battery 201A of the main device 20 side.

The charging circuit 106 is a circuit for charging the secondary battery 101C of the power supply 101 with electric power supplied from the main device 20 side.

In the case of the present embodiment, the charging circuit 106 is made up of, for example, a boost DC-DC circuit. The charging circuit 106 supplies a voltage of, for example, 4.2 V to the secondary battery 101C when electric power is supplied from the main device 20. A circuit that prevents backflow of current is provided in the charging circuit 106.

The same method as the method of supplying electric power from the feeder circuit 102 to the main device 20 is used to supply electric power from the main device 20 to the charging circuit 106. In other words, it is contact power supply or contactless power supply.

The operation of the charging circuit 106 is controlled by the controller 206 of the main device 20. The SPI communication method or the UART communication method is used to transmit a control signal. For example, BLE is used as a communication line.

In the case of the present embodiment as well, a similar processing operation to the above-described first embodiment is executed; however, a USB charging operation is different.

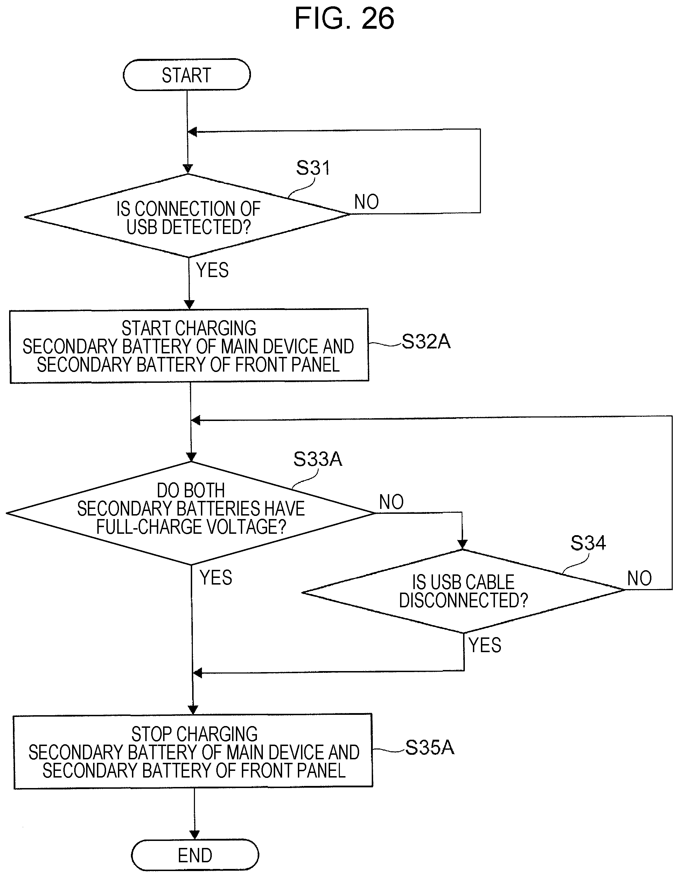

Fig. 26 is a flowchart that illustrates an example of a USB charging operation that is executed by the controller 206. Fig. 26 assigns corresponding reference signs to corresponding parts of Fig. 14.

Initially, the controller 206 determines whether connection of USB is detected (step 31).

When a negative result is obtained in step 31, the controller 206 repeats the determination of step 31.

On the other hand, when an affirmative result is obtained in step 31, the controller 206 starts charging the secondary battery 201A of the main device 20 and the secondary battery 101C of the front panel 10 (step 32A). Actual charging may adopt a method in which any one of the secondary battery 201A of the main device 20 and the secondary battery 101C of the front panel 10 is charged to a full capacity first and subsequently the other one is charged to a fully capacity. The secondary battery 201A of the main device 20 and the secondary battery 101C of the front panel 10 may be charged in parallel.

Subsequently, the controller 206 determines whether the two secondary batteries 101C, 201A each have a full-charge voltage (step 33A).

When any one of the two has not reached a full-charge voltage, a negative result is obtained in step 33A. On the other hand, when both the two secondary batteries 101C, 201A have reached a full-charge voltage, an affirmative result is obtained in step 33A.

When a negative result is obtained in step 33A, the controller 206 determines whether the USB cable is disconnected (step 34).

When the USB cable remains connected, a negative result is obtained in step 34. On the other hand, when the USB cable is disconnected during charging, an affirmative result is obtained in step 34.

When a negative result is obtained in step 34, the controller 206 returns to step 33A and repeats the determination of step 33A.

When an affirmative result is obtained in step 33A or when an affirmative result is obtained in step 34, the controller 206 stops charging the secondary battery 201A of the main device 20 and the secondary battery 101C of the front panel 10 (step 35A).

After that, the controller 206 ends the USB charging operation.

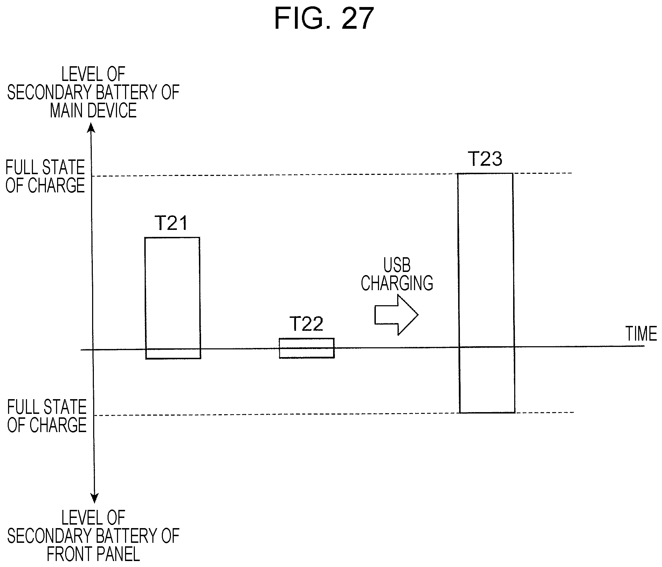

Fig. 27 is a timing chart that illustrates a USB charging operation. Fig. 27 assigns corresponding reference signs to corresponding parts of Fig. 15.

The levels of the batteries at time T21 and time T22 in Fig. 27 are the same as those in the example of Fig. 15. However, in the case of the present embodiment, since the battery of the front panel is the secondary battery 101C, not only the secondary battery 201A of the main device 20 but also the secondary battery 101C of the front panel 10 is recovered to a full state of charge at time T23 after USB charging.

### <Fifth Embodiment>

In the present embodiment, the front panel 10 with a controller will be described.

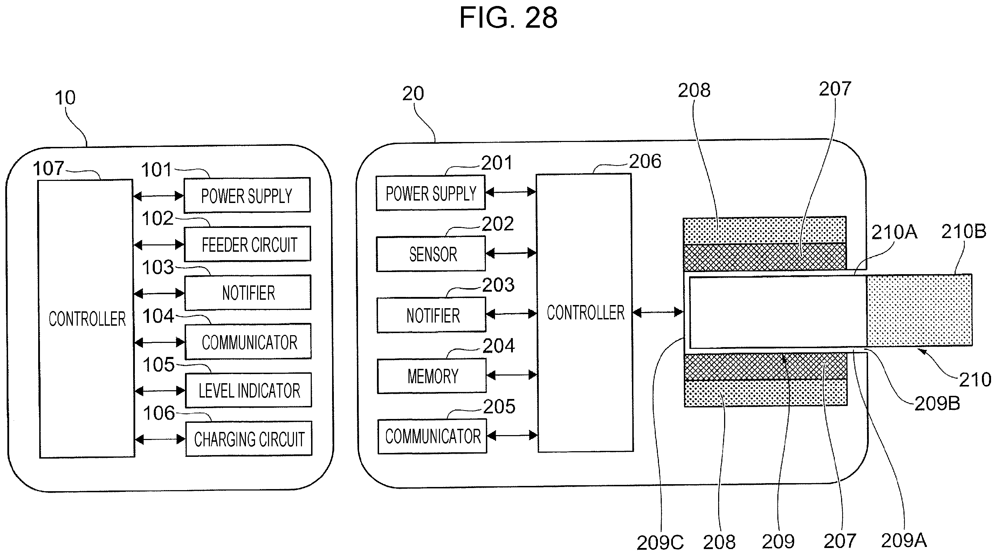

Fig. 28 is a diagram that schematically illustrates the internal configuration of the aerosol generating device 1 used in a fifth embodiment. Fig. 28 assigns corresponding reference signs to corresponding parts of Fig. 24.

The front panel 10 illustrated in Fig. 28 additionally includes a controller 107. The other configuration is the same as that of the front panel 10 illustrated in Fig. 24.

The controller 107 here is capable of communicating with the communicator 205 of the main device 20, a smartphone, or the like through the communicator 104.

For example, the controller 107 of the front panel 10 acquires the level of the secondary battery 201A provided in the main device 20 through communication with the controller 206 of the main device 20. In this case, the controller 107 calculates the total value of the level of the secondary battery 101C provided in the front panel 10 and the level of the secondary battery 201A provided in the main device 20 and displays the calculated total value of the levels.

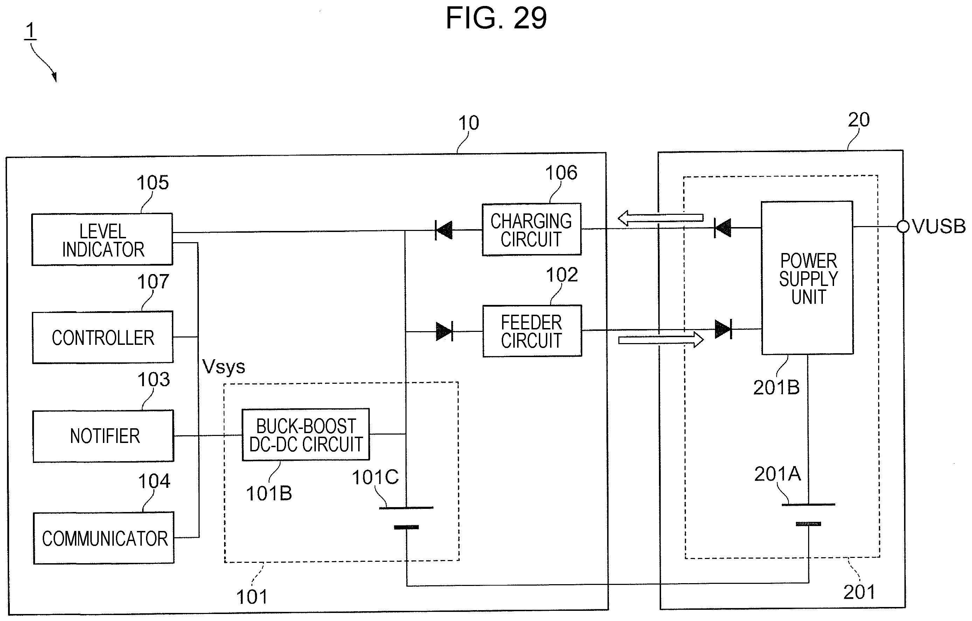

Fig. 29 is a diagram that schematically illustrates a connection relation between the front panel 10 and a power supply system circuit in the main device 20, used in the fifth embodiment. Fig. 29 assigns corresponding reference signs to corresponding parts of Fig. 25.

In the case of Fig. 29, the system power supply Vsys is supplied to the controller 107 from the secondary battery 101C of the front panel 10 through the buck-boost DC-DC circuit 101B. Therefore, even when the controller 107 is provided in the front panel 10, electric power of the secondary battery 201A of the main device 20 is not consumed.

Since the front panel 10 in the present embodiment includes the secondary battery 101C, the communicator 104, and the controller 107, the front panel 10 in a state removed from the main device 20 is also capable of autonomous operation. A semiconductor memory needed to execute a function is provided in the controller 107.

### <Sixth Embodiment>

In the present embodiment, a function of determining whether the level of the battery usable in the aerosol generating device 1 is sufficient to use up an unused stick substrate 210 (see Fig. 7) and notifying a user will be described.

An unused stick substrate 210 here means a stick substrate 210 yet to be heated even once. Therefore, when a stick substrate 210 has been inserted in the hole 22 of the main device 20 but has not been heated yet, the stick substrate 210 is unused. In other words, an unused stick substrate 210 is a new stick substrate 210.

The phrase "the level of the battery is sufficient to use up an unused stick substrate 210", for example, means that the amount of electric power needed to generate an estimated amount of aerosol from an unused stick substrate 210 is left.

The estimated amount here, for example, may be defined in accordance with the amount of aerosol source included in an unused stick substrate 210, may be defined in accordance with a control profile of the heater 207, or may be defined according to the version and component configuration of the main device 20. The control profile defines the timing of heating operation and a change in target temperature after the start of heating operation.

When a plurality of control profiles is prepared in the main device 20 and a user is able to select which control profile is used to generate an aerosol, an estimated amount is defined according to the control profile or heating mode selected by the user.

When, for example, a heating mode in which the amount of aerosol generated increases but electric power consumption increases (hereinafter, referred to as "high mode") and a heating mode in which the amount of aerosol generated is a standard amount but electric power consumption is allowed to be small (hereinafter, referred to as "normal mode"), an estimated amount is defined in the heating mode currently selected.

Even when the level of the battery is short to generate the estimated amount in the case of the high mode but the level of the battery is sufficient to generate the estimated amount in the case of the normal mode, this information may be displayed at the notifier 103.

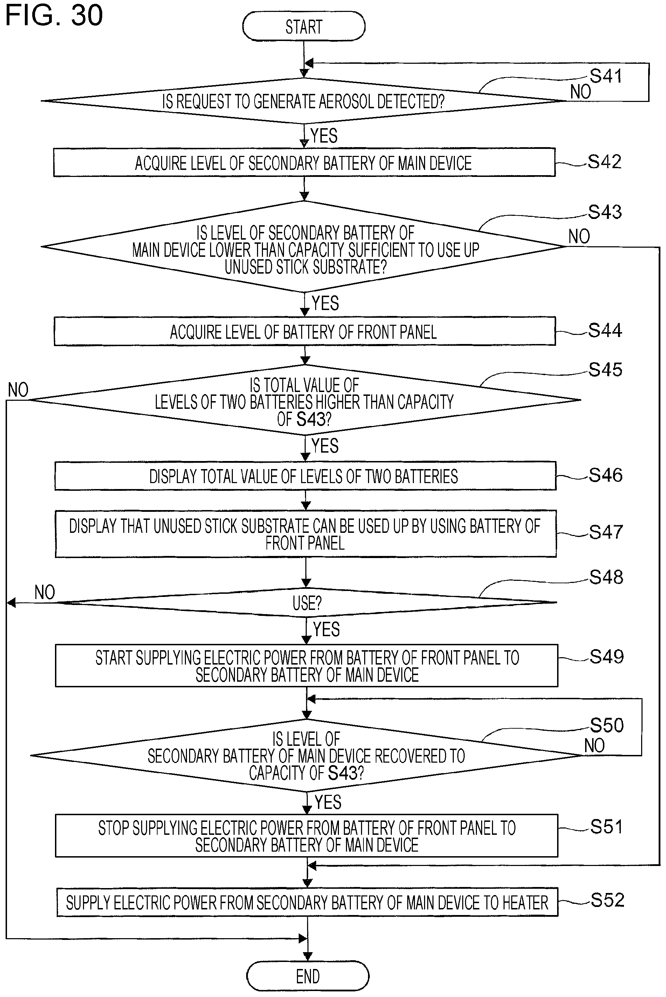

Fig. 30 is a flowchart that illustrates an example of a processing operation example in the sixth embodiment.

The processing operation illustrated in Fig. 30 is executed by the controller 206 (see Fig. 7) of the main device 20 or the controller 107 (see Fig. 29) of the front panel 10. Hereinafter, the processing operation of the controller 206 will be described.

Initially, the controller 206 determines whether a request to generate an aerosol is detected (step 41). The generation request here is, for example, detected when the front panel 10 is attached to the main device 20 and the button 20B is pressed and held for a second or longer in a state where the shutter 30 is open. Operation to press the front panel 10 attached to the main device 20 with a finger to deform is needed to press and hold the button 20B.

When a request to generate an aerosol is not detected, a negative result is obtained in step 41. In this case, the controller 206 repeats the determination of step 41.

On the other hand, when a request to generate an aerosol is detected, an affirmative result is obtained in step 41. In this case, the controller 206 acquires the level of the secondary battery 201A of the main device 20 (step 42).

Subsequently, the controller 206 determines whether the level of the secondary battery 201A of the main device 20 is lower than a capacity sufficient to use up an unused stick substrate 210 (step 43).

When the level of the secondary battery 201A is higher than a reference capacity, a negative result is obtained in step 43. In this case, the controller 206 supplies electric power from the secondary battery 201A of the main device 20 to the heater 207 (step 52). In other words, generation of an aerosol using the secondary battery 201A of the main device 20 is started.

In contrast, when the level of the secondary battery 201A is lower than the reference capacity, an affirmative result is obtained in step 43. In this case, the controller 206 acquires the level of the battery of the front panel 10 (step 44). The battery here can be a case of the primary battery 101A or can be a case of the secondary battery 101C according to the type of the front panel 10 attached. The level here is desirably converted to a level actually usable in the main device 20, as described in the second embodiment.

Subsequently, the controller 206 determines whether the total value of the levels of the two batteries is higher than the capacity of step 43 (step 45).

When the total value of the levels of the two batteries is lower than the capacity of step 43, a negative result is obtained in step 45. In this case, the controller 206 ends the process without starting heating operation.

On the other hand, when the total value of the levels of the two batteries is higher than the capacity of step 43, an affirmative result is obtained in step 45. In this case, the controller 206 displays the total value of the levels of the two batteries (step 46).

Subsequently, the controller 206 displays that an unused stick substrate can be used up by using the secondary battery of the front panel 10 (step 47).

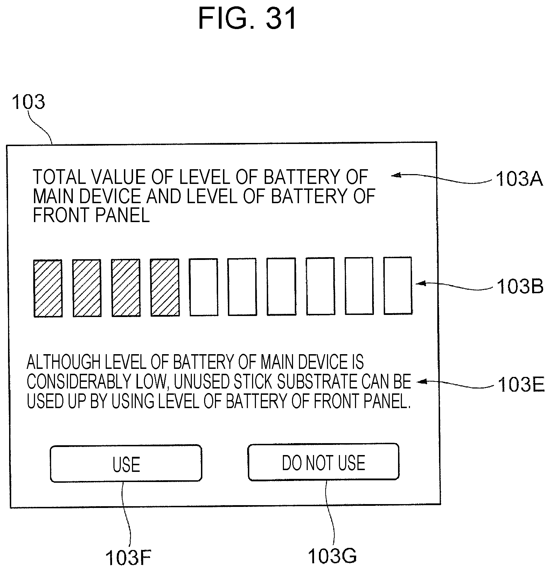

Fig. 31 is a diagram that illustrates a display example of information, made by the notifier 103. Fig. 31 assigns corresponding reference signs to corresponding parts of Fig. 21.

In addition to the explanatory text 103A that the total value of the two batteries is displayed, and the display field 103B of the total value of the levels of the two batteries, explanatory text 103E indicating that the level of the battery of the front panel can be used, a "use" button 103F, and a "do not use" button 103G are displayed at the notifier 103 illustrated in Fig. 31.

In the example of Fig. 31, "although the level of the battery of the main device is considerably low, when the level of the battery of the front panel is used, an unused stick substrate can be used up" is described as the explanatory text 103E.

Through display of the explanatory text 103E, a user is able to determine how the battery provided in the front panel 10 is used.

Subsequently, the controller 206 determines whether the level of the battery of the front panel 10 is used (step 48). Heating of the stick substrate 210 is not started during charging of the secondary battery 201A, so a user is asked for selection.

When instructions not to use the level of the battery of the front panel 10 are received, a negative result is obtained in step 48. In this case, the controller 206 ends the process without starting heating operation of the heater 207.

When instructions to use the level of the battery of the front panel 10 are received, an affirmative result is obtained in step 48. In this case, the controller 206 starts supplying electric power from the battery of the front panel 10 to the secondary battery 201A of the main device 20 (step 49). In Fig. 30, a case where the secondary battery 201A is charged and a case where the secondary battery 201A is not charged are switched through checking of a user. Alternatively, after execution of step 47, the process may directly proceed to step 49.

Subsequently, the controller 206 determines whether the level of the secondary battery 201A of the main device 20 is recovered to the capacity of step 43 (step 50).

When recovery of the capacity is not found, a negative result is obtained in step 50. In this case, the controller 206 repeats the determination of step 50.

On the other hand, when recovery of the capacity is found, an affirmative result is obtained in step 50. In this case, the controller 206 stops supplying electric power from the battery of the front panel 10 to the secondary battery 201A of the main device 20 (step 51).

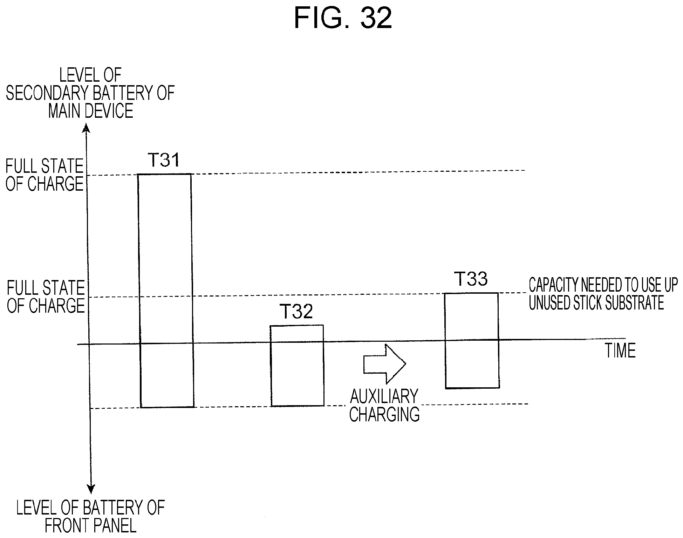

Fig. 32 is a timing chart that illustrates auxiliary charging that uses the battery of the front panel 10 as an external power supply.

The abscissa axis of the timing chart represents time, the upper half of the ordinate axis represents the level of the secondary battery 201A in the main device 20, and the lower half of the ordinate axis represents the level of the battery in the front panel 10. As described above, the battery of the front panel 10 can be a case of the primary battery 101A or can be a case of the secondary battery 101C.

In the case of time T31, both the battery of the front panel 10 and the secondary battery 201A of the main device 20 are in a full state of charge.

At time T32 of Fig. 32, a state where the level of the secondary battery 201A of the main device 20 is lower than the capacity needed to use up an unused stick substrate 210 is illustrated. The battery of the front panel 10 remains in a full state of charge. The level of the battery of the front panel 10 can be decreased.

In any case, when the level of the battery of the front panel 10 is used, it is possible to recover the level of the secondary battery 201A of the main device 20.

Auxiliary charging is started from time T32. By performing auxiliary charging, the level of the battery of the front panel 10 decreases, while, on the other hand, the level of the secondary battery 201A of the main device 20 increases.

At time T33, charging is stopped at the time when the level of the secondary battery 201A of the main device 20 is recovered to the capacity needed to use up an unused stick substrate 210.

After that, the controller 206 supplies electric power from the secondary battery 201A of the main device 20 to the heater 207 (step 52).

In the case of the present embodiment, even in a state where the level of the secondary battery 201A of the main device 20 is lower than the capacity needed to use up an unused stick substrate 210, the capacity of the secondary battery 201A of the main device 20 is recovered by using the battery of the front panel 10, so it is possible to use up an unused stick substrate 210 even when heating operation is started.

When the capacity of the secondary battery 201A of the main device 20 cannot be recovered even when the battery of the front panel 10 is used, heating operation of the heater 207 is not started. Thus, heating operation ends before an unused stick substrate 210 is used up, and it is possible to avoid a situation that disposal of the stick substrate 210 occurs before happens.

### <Seventh Embodiment>

In the present embodiment, an example in which whether the secondary battery 201A of the main device 20 is short in level is determined regardless of a request to generate an aerosol and charging of the secondary battery 201A is started in preparation for inhalation in the future when shortage of the level is estimated will be described.

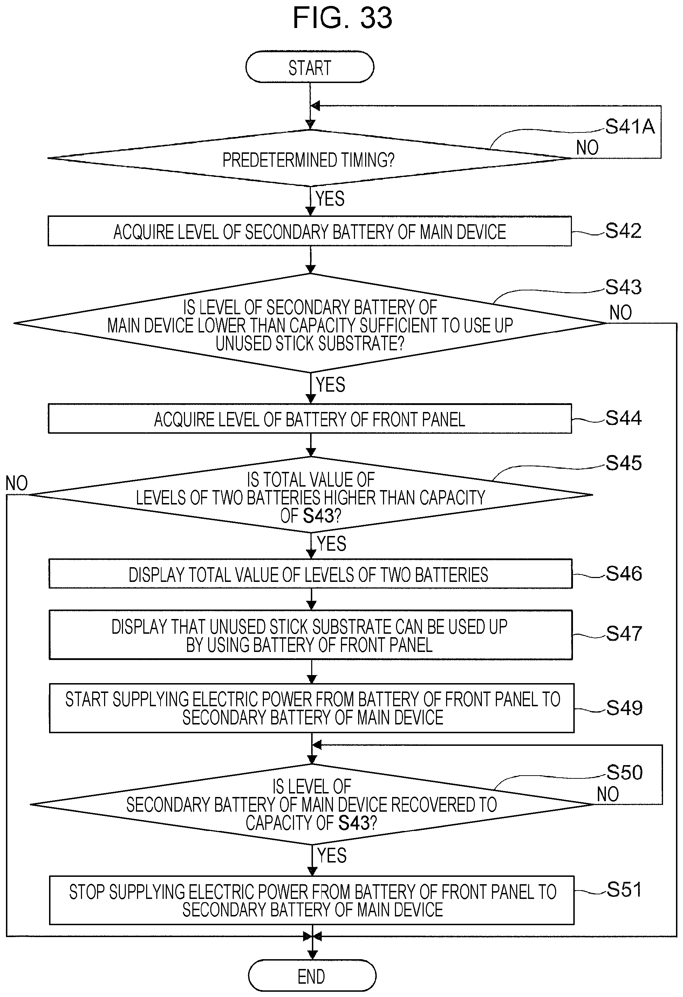

Fig. 33 is a flowchart that illustrates an example of a processing operation example in the seventh embodiment. Fig. 33 assigns corresponding reference signs to corresponding parts of Fig. 30.

The processing operation illustrated in Fig. 33 is executed by the controller 206 (see Fig. 7) of the main device 20 or the controller 107 (see Fig. 29) of the front panel 10. Hereinafter, the processing operation of the controller 206 will be described.

The controller 206 of the main device 20 determines whether it is predetermined timing (step 41A).

Examples of the predetermined timing include a case where the number of stick substrates 210 inhaled after fully charging the secondary battery 201A of the main device 20 has reached a reference value (for example, 10), a case where a predetermined number of times of heating start operation is detected, time set by a timer (for example, six o'clock every morning), and a user's non-inhalation time specified by machine learning. As another condition of the predetermined timing, a condition that a difference ΔC (= FC1 - FC2) between a full charge capacity FC1 of the secondary battery 201A of the main device 20 side and a full charge capacity FC2 of the secondary battery 101C of the front panel 10 side is higher than a current capacity C of the secondary battery 201A of the main device 20 side may be desired to be satisfied.

In the determination of step 41A, when it is not the predetermined timing, the controller 206 of the main device 20 side obtains a negative result in step 41A. In this case, the controller 206 repeats the determination of step 41A.

On the other hand, in the determination of step 41A, when it is the predetermined timing, the controller 206 of the main device 20 side obtains an affirmative result in step 41A. In this case, the controller 206 acquires the level of the secondary battery 201A of the main device 20 regardless of a generation request from a user (step 42).

Subsequently, the controller 206 determines whether the level of the secondary battery 201A of the main device 20 is lower than a capacity sufficient to use up an unused stick substrate 210 (step 43).

When a negative result is obtained in step 43, it is not necessary to charge the secondary battery 201A. Therefore, the controller 206 ends the process.

On the other hand, when an affirmative result is obtained in step 43, the controller 206 acquires the level of the battery of the front panel 10 (step 44).

Subsequently, the controller 206 determines whether the total value of the levels of the two batteries is higher than the capacity of step 43 (step 45).

When the total value of the levels of the two batteries is lower than the capacity of step 43, a negative result is obtained in step 45. In this case, the amount of electric power needed for the secondary battery 201A is not recovered even when charging is performed, so the controller 206 ends the process. The necessity of charging may be notified to a user.

On the other hand, when the total value of the levels of the two batteries is higher than the capacity of step 43, an affirmative result is obtained in step 45. In this case, the controller 206 displays the total value of the levels of the two batteries (step 46).

Subsequently, the controller 206 displays that an unused stick substrate can be used up by using the battery of the front panel 10 (step 47).

In the present embodiment, step 49 is started without inquiring a user about using the level of the battery of the front panel 10. In other words, the controller 206 starts supplying electric power from the battery of the front panel 10 to the secondary battery 201A of the main device 20 (step 49).

Subsequently, the controller 206 determines whether the level of the secondary battery 201A of the main device 20 is recovered to the capacity of step 43 (step 50).

When recovery of the capacity is not found, a negative result is obtained in step 50. In this case, the controller 206 repeats the determination of step 50.

On the other hand, when recovery of the capacity is found, an affirmative result is obtained in step 50. In this case, the controller 206 stops supplying electric power from the battery of the front panel 10 to the secondary battery 201A of the main device 20 (step 51).

In this way, in the present embodiment, shortage in the level of the secondary battery 201A of the main device 20 is resolved before a request to generate an aerosol from a user. As a result, a user is able to start inhaling an aerosol from time desired.

### <Eighth Embodiment>

In the present embodiment, an example in which charging of the secondary battery 201A of the main device 20 is started regardless of an excess or shortage of the level of the battery of the front panel 10 will be described.

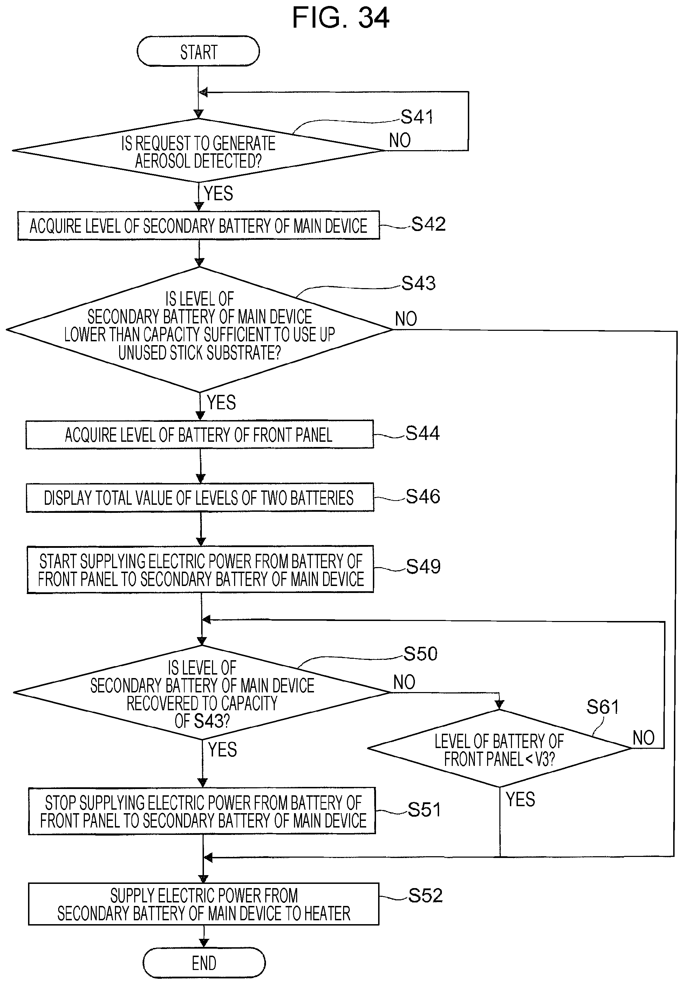

Fig. 34 is a flowchart that illustrates an example of a processing operation example in the eighth embodiment. Fig. 34 assigns corresponding reference signs to corresponding parts of Fig. 30.

The processing operation illustrated in Fig. 34 is executed by the controller 206 (see Fig. 7) of the main device 20 or the controller 107 (see Fig. 29) of the front panel 10. Hereinafter, the processing operation of the controller 206 will be described.

Initially, the controller 206 determines whether a request to generate an aerosol is detected (step 41). When a negative result is obtained in step 41, the controller 206 repeats the determination of step 41.

On the other hand, when an affirmative result is obtained in step 41, the controller 206 acquires the level of the secondary battery 201A of the main device 20 (step 42).

Subsequently, the controller 206 determines whether the level of the secondary battery 201A of the main device 20 is lower than a capacity sufficient to use up an unused stick substrate 210 (step 43).

When a negative result is obtained in step 43, the controller 206 supplies electric power from the secondary battery 201A of the main device 20 to the heater 207 (step 52). In other words, generation of an aerosol using the secondary battery 201A of the main device 20 is started.

On the other hand, when an affirmative result is obtained in step 43, the controller 206 acquires the level of the battery of the front panel 10 (step 44).

Subsequently, the controller 206 displays the total value of the levels of the two batteries (step 46).

In the case of the present embodiment, because step 45 is not executed, there is no guarantee to recover the capacity to use up an unused stick substrate 210, but the controller 206 starts supplying electric power from the battery of the front panel 10 to the secondary battery 201A of the main device 20 (step 49).

After that, the controller 206 determines whether the level of the secondary battery 201A of the main device 20 is recovered to the capacity of step 43 (step 50). When a negative result is obtained in step 50, the controller 206 determines whether the level of the battery of the front panel 10 is lower than a threshold V3 (step 61).

When the level of the battery of the front panel 10 is higher than or equal to the threshold V3, a negative result is obtained in step 61. In this case, the controller 206 returns to step 50.

When the level of the battery of the front panel 10 is lower than the threshold V3, an affirmative result is obtained in step 61. In this case, the controller 206 proceeds to step 52. However, when heating operation is started in this case, the level of the battery is short of the amount of electric power with which an unused stick substrate 210 can be used up. However, it is possible to respond to the need of a user who wants to inhale an aerosol within a possible range even before full charge of the secondary battery 201A.

The process returns to the description of step 50.

When an affirmative result is obtained in step 50, the controller 206 stops supplying electric power from the battery of the front panel 10 to the secondary battery 201A of the main device 20 (step 51). After that, the controller 206 proceeds to step 52. In this case, it is possible to use up an unused stick substrate 210.

In the case of the present embodiment, before an excess or shortage of the total value of the level of the battery of the front panel 10 and the level of the secondary battery 201A of the main device 20 with respect to the capacity needed to use up an unused stick substrate 210, charging of the secondary battery 201A of the main device 20 using the level of the battery of the front panel 10 is performed.

As a result, when the level of the secondary battery 201A is recovered to the capacity needed to use up an unused stick substrate 210, the unused stick substrate 210 can be used without waste.

Even when the level of the secondary battery 201A is not recovered to the capacity needed to use up an unused stick substrate 210, it is possible to generate an aerosol by maximally using the levels of the two batteries.

### <Ninth Embodiment>

In the present embodiment, generation of an aerosol by using the battery of the front panel 10 will be described.

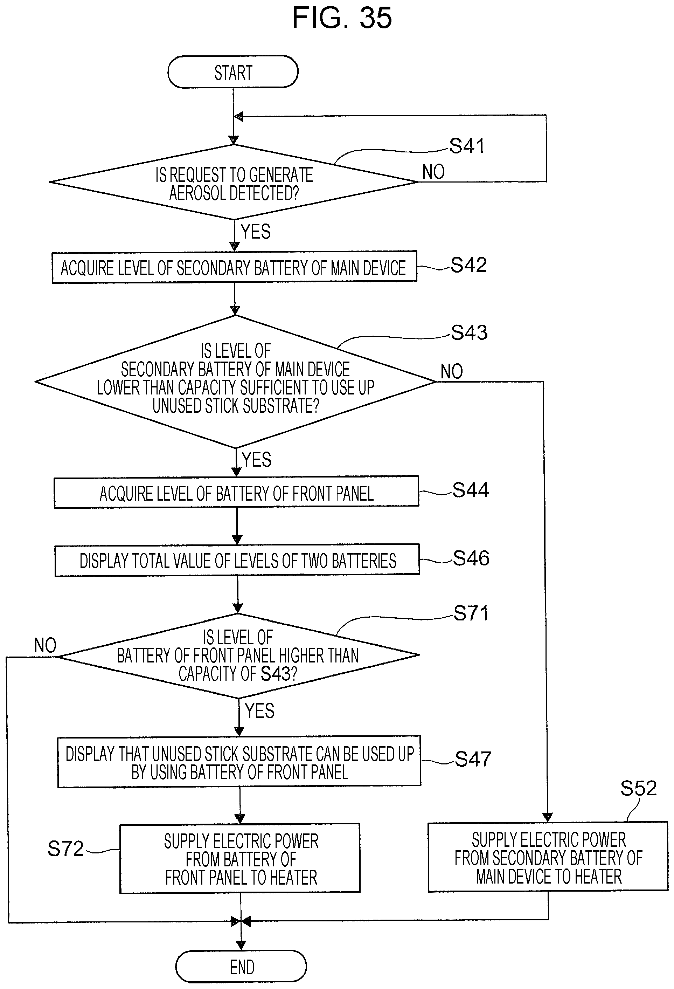

Fig. 35 is a flowchart that illustrates an example of a processing operation example in the ninth embodiment. Fig. 35 assigns corresponding reference signs to corresponding parts of Fig. 30.

The processing operation illustrated in Fig. 35 is executed by the controller 206 (see Fig. 7) of the main device 20 or the controller 107 (see Fig. 29) of the front panel 10. Hereinafter, the processing operation of the controller 206 will be described.

Initially, the controller 206 determines whether a request to generate an aerosol is detected (step 41). When a negative result is obtained in step 41, the controller 206 repeats the determination of step 41.

On the other hand, when an affirmative result is obtained in step 41, the controller 206 acquires the level of the secondary battery 201A of the main device 20 (step 42).

Subsequently, the controller 206 determines whether the level of the secondary battery 201A of the main device 20 is lower than the capacity sufficient to use up the stick substrate 210 (step 43).

When a negative result is obtained in step 43, the controller 206 supplies electric power from the secondary battery 201A of the main device 20 to the heater 207 (step 52). In other words, generation of an aerosol using the secondary battery 201A of the main device 20 is started.

On the other hand, when an affirmative result is obtained in step 43, the controller 206 acquires the level of the battery of the front panel 10 (step 44).

Subsequently, the controller 206 displays the total value of the levels of the two batteries (step 46).

After that, the controller 206 determines whether the level of the battery of the front panel 10 is higher than the capacity of step 43 (step 71).

When the level of the battery of the front panel 10 is lower than the capacity of step 43, the controller 206 ends the process without heating the heater 207.

In contrast, when the level of the battery of the front panel 10 is higher than the capacity of step 43, the controller 206 displays that an unused stick substrate 210 can be used up by using the battery of the front panel (step 47) and supplies electric power from the battery of the front panel 10 to the heater 207 (step 72).

In the case of the present embodiment, even when the level of the secondary battery 201A of the main device 20 is short, but when the level of the battery of the front panel 10 is higher than the capacity by which an unused stick substrate 210 can be used up, heating of the stick substrate 210 is started by using the level of the battery of the front panel 10.

In this case, it is possible to generate an aerosol without further reducing the level of the secondary battery 201A of the main device 20.

### <Other Embodiments>

(1) The embodiments of the present disclosure have been described; however, the technical scope of the present disclosure is not limited to the scope described in the above-described embodiments. It is obvious from the appended claims that the technical scope of the present disclosure also encompasses the above-described embodiments with various modifications or improvements.
(2) In the above-described embodiments, the case where a seam part between the front panel 10 and the main device 20 is continuously flush without any step and provides a unified appearance has been described. Alternatively, a step, a cutout, or the like may be provided at a seam part when there is a unity of appearance with the main device 20.
(3) In the above-described embodiments, the case where the aerosol source is solid has been described. Alternatively, the aerosol source may be liquid. When the aerosol source is liquid, a method in which an aerosol source is guided to a capillary called wick using capillarity and the aerosol source is vaporized by heating a coil wound around the wick is adopted.
(4) In the above-described embodiments, the aerosol generating device that generates an aerosol by heating a solid aerosol source has been described. Alternatively, an aerosol generating device may generate an aerosol by individually heating a solid aerosol source and a liquid aerosol source. The aerosol generating device of this type is also called a hybrid aerosol generating device.
(5) In the above-described first to third embodiments, the controller 206 of the main device 20 controls calculation and display of the total value of the levels of the batteries. Alternatively, a controller that controls calculation and display of the total value of the levels of the batteries may be provided in the front panel 10. For example, an ASIC, a DSP, or an FPGA can be used as the controller here. Calculation of the total value here is performed as computation determined in hardware. When a CPU, an MPU, a GPU, or the like is provided in the front panel 10, it is possible to, for example, calculate the total value of the levels of the batteries through running a program.
(6) In the above-described embodiments, the case where electric power from the battery of the front panel 10 and electric power from the secondary battery 201A of the main device 20 are output to a common power supply line through the power supply unit 201B (see Fig. 8) has been described. Alternatively, electric power supplied from the battery of the front panel 10 to the main device 20 may be supplied to sections of the main device 20 through a dedicated power supply line.
   When electric power is supplied through a dedicated power supply line, a buck-boost DC-DC circuit for generating a voltage suitable for each power supply line is provided in the front panel 10 or the main device 20.
   When electric power is supplied from the front panel 10 to only a designated electronic component, a dedicated power supply line just needs to be provided for only a designated electronic component.
(7) In the above-described fourth and fifth embodiments, the charging circuit 106 is provided in the front panel 10. Alternatively, a configuration not including the charging circuit 106 may be adopted. In this case, the power supply unit 201B of the main device 20 functions as the charging circuit 106 to charge the secondary battery 101C.
(8) In the above-described embodiments, the case where the battery is provided in the front panel 10 for the main device 20 that generates an aerosol has been described; however, an electronic device that uses a panel with a battery is not limited to the aerosol generating device 1 (main device 20). In other words, an object to attach a panel with a battery may be a remote control, a game machine, a music player, a car navigation system, a video camcorder, a digital still camera, an electronic dictionary, a calculator, or another electronic device. The panel with a battery here is an example of the cover member. The panel with a battery is not limited to the front panel.
(9) In the above-described embodiments, a film-type lithium battery, capacitor, or the like is estimated as a battery provided in the front panel 10. Alternatively, a coin shape or a chip shape may be adopted.
(10) In the above-described embodiments, an example in which generation of an aerosol is permitted when the front panel 10 is attached to the main device 20 has been described. Alternatively, the main device 20 may be configured to be capable of generating an aerosol even in a state where the front panel 10 is not attached.
   In this case, attachment of the front panel 10 to the main device 20 is used to expand the function executable in the main device 20. For example, the main device 20 in a state where the front panel 10 is removed operates only on the built-in secondary battery 201A (see Fig. 8), and the main device 20 to which the front panel 10 with a battery is attached has an enabled function of using electric power from the battery (the primary battery 101A, the secondary battery 101C) of the front panel 10.
(11) In the above-described embodiments, a state where generation of an aerosol is possible has been described as an example of the aerosol generating device 1 (main device 20) in an operable state; however, the aerosol generating device 1 (main device 20) in an operable state is not limited thereto. For example, even when it is not possible to generate an aerosol due to shortage of electric power but when another function is operating, it is the aerosol generating device 1 (main device 20) in an operable state. Examples of another function here include a function of checking and presenting the level of the secondary battery 201A or the like, a function of acquiring and presenting a history of inhalation, and a function of communicating with an external terminal.
(12) In the above-described embodiments, an example in which the front panel 10 in a state of being attached to the main device 20 is pushed to be deformed and the button 20B provided at the main device 20 is operated has been described. Alternatively, a method other than deforming the front panel 10 may be used to input instructions to the main device 20.

For example, the front panel 10 may include a touch panel and information indicating operation of a user to the touch panel may be notified to the controller 206 (see Fig. 7) of the main device 20 via the communicator 104 (see Fig. 7).

For example, a switch or a button may be disposed at the front panel 10, and presence or absence or the like of operation to them may be notified to the controller 206 (see Fig. 7) of the main device 20 via the communicator 104 (see Fig. 7). The touch panel, the switch, or the like here is an example of the operating portion.

A heat shield structure is adopted to a surface member or inside of the main device 20 of this type.

(13) In the above-described sixth, eighth embodiments and the like, detection of a request to generate an aerosol is requested as a precondition for execution of step 43 (see Fig. 30), and detection of predetermined timing is requested as a precondition for execution of step 43 (see Fig. 33) in the seventh embodiment; however, detection of another situation may be included. Examples of another situation include that the shutter 30 is caused to slide to an open position, and a case where the level of the battery is displayed (including a case of instructions of a user).

(14) In the above-described sixth, eighth embodiments, and the like, an example in which, on condition that a predetermined condition is further satisfied when a request to generate an aerosol is received, supply of electric power from the battery of the front panel 10 side to the secondary battery 201A of the main device 20 side has been described. However, it is conceivable that a case where a time that is taken until the capacity of the secondary battery 201A of the main device 20 side is recovered to a sufficient capacity to use up the stick substrate 210 is long.

The controller 206 may have a function to present to a user through the LED 20A (see Fig. 5) or the notifier provided at the front panel 10, the progress of charging or current capacity of the battery 201A of the main device 20 side and a function of providing notification to a smartphone or the like.

The controller 206 may have a function of presenting to a user that, when recovery of the capacity sufficient to use up the stick substrate 210 is detected, generation of an aerosol is possible, heating of the aerosol source is possible, or the like and a function of providing notification to a smartphone or the like. Predictability of a user can be increased by mounting these functions.

### <Summary>

The present disclosure includes the following configuration.
(1) A cover member that is attachable to and detachable from an electronic device that operates on a built-in first battery, the cover member including: a second battery; a feeder circuit that supplies electric power from the second battery to the electronic device, and a notifier that notifies a total value of a level of a first battery and a level of the second battery.
(2) In the cover member according to (1), the notifier notifies the total value calculated by using the level of the second battery, corrected according to a supply efficiency of electric power from the second battery to the electronic device.
(3) The cover member according to (1) or (2) further including a charging circuit that charges the second battery upon receiving electric power supplied from the electronic device.
(4) In the cover member according to any one of (1) to (3), the notifier individually notifies the level of the first battery and the level of the second battery in response to operation of a user.
(5) The cover member according to any one of (1) to (4) further including a controller that calculates the total value and causes the notifier to display the total value.
(6) In the cover member according to any one of (1) to (4), the notifier displays the total value acquired through communication with the electronic device.
(7) In the cover member according to any one of (1) to (6), a main body attached to the electronic device covers part of a surface of the electronic device.
(8) In the cover member according to any one of (1) to (7), a main body is allowed to operate a switch on the electronic device side by a user pushing the main body in a state attached to the electronic device, the switch being provided at a position facing the main body.
(9) The cover member according to any one of (1) to (7) further including an operating portion that notifies the electronic device upon receiving operation of a user.
(10) In the cover member according to any one of (1) to (9), a main body attached to the electronic device provides a unified appearance with a part not covered with the main body in the electronic device.
(11) In the cover member according to any one of (1) to (10), the electronic device is an aerosol generating device including a heater that heats an aerosol source, and attachment of the main body to the aerosol generating device is one of conditions on which the aerosol source is allowed to be heated by the heater.
(12) In the cover member according to (11), when the level of the first battery is lower than a capacity needed to use up an unused aerosol source but the total value of the level of the first battery and the level of the second battery is higher than the capacity needed to use up an unused aerosol source, the notifier notifies that an unused aerosol source can be used up by using the level of the second battery.
(13) In the cover member according to (11), when the level of the first battery is lower than a capacity needed to use up an unused aerosol source but the level of the second battery is higher than the capacity needed to use up an unused aerosol source, the notifier notifies that an unused aerosol source can be used up by using the level of the second battery.

### Reference Signs List

1 aerosol generating device
10 front panel
10A main body panel
10C, 20C magnet
20 main device
20B button
20A LED
21 USB connector
22 hole
30 shutter
101, 201 power supply
101A primary battery
101B buck-boost DC-DC circuit
101C, 201A secondary battery
102 feeder circuit
103,203 notifier
104,205 communicator
105 level indicator
106 charging circuit
107 controller
202 sensor
204 memory
206 controller
207 heater
208 heat insulator
209 holder
210 stick substrate

## Claims

1. A cover member that is attachable to and detachable from an electronic device that operates on a built-in first battery, the cover member comprising:
a second battery,
a feeder circuit that supplies electric power from the second battery to the electronic device, and
a notifier that notifies a total value of a level of the first battery and a level of the second battery.

2. The cover member according to claim 1, wherein
the notifier notifies the total value calculated by using the level of the second battery, corrected according to a supply efficiency of electric power from the second battery to the electronic device.

3. The cover member according to claim 1 or 2, further comprising
a charging circuit that charges the second battery upon receiving electric power supplied from the electronic device.

4. The cover member according to any one of claims 1 to 3, wherein
the notifier individually notifies the level of the first battery and the level of the second battery in response to operation of a user.

5. The cover member according to any one of claims 1 to 4, further comprising
a controller that calculates the total value and causes the notifier to display the total value.

6. The cover member according to any one of claims 1 to 4, wherein
the notifier displays the total value acquired through communication with the electronic device.

7. The cover member according to any one of claims 1 to 6, wherein
a main body attached to the electronic device covers part of a surface of the electronic device.

8. The cover member according to any one of claims 1 to 7, wherein
a main body is allowed to operate a switch on the electronic device side by a user pushing the main body in a state attached to the electronic device, the switch being provided at a position facing the main body.

9. The cover member according to any one of claims 1 to 7, further comprising
an operating portion that notifies the electronic device upon receiving operation of a user.

10. The cover member according to any one of claims 1 to 9, wherein
a main body attached to the electronic device provides a unified appearance with a part not covered with the main body in the electronic device.

11. The cover member according to any one of claims 1 to 10, wherein
the electronic device is an aerosol generating device including a heater that heats an aerosol source, and
attachment of the main body to the aerosol generating device is one of conditions on which the aerosol source is allowed to be heated by the heater.

12. The cover member according to claim 11, wherein
when the level of the first battery is lower than a capacity needed to use up an unused aerosol source but the total value of the level of the first battery and the level of the second battery is higher than the capacity needed to use up an unused aerosol source,
the notifier notifies that an unused aerosol source can be used up by using the level of the second battery.

13. The cover member according to claim 11, wherein
when the level of the first battery is lower than a capacity needed to use up an unused aerosol source but the level of the second battery is higher than the capacity needed to use up an unused aerosol source,
the notifier notifies that an unused aerosol source can be used up by using the level of the second battery.
